(19) Europäisches Patentamt / European Patent Office / Office européen des brevets

(11) **EP 4 335 267 A1**

(12) ## EUROPEAN PATENT APPLICATION
published in accordance with Art. 153(4) EPC

(43) Date of publication:
**13.03.2024 Bulletin 2024/11**

(21) Application number: **22832396.0**

(22) Date of filing: **04.02.2022**

(51) International Patent Classification (IPC):
**A01B 69/00** (2006.01)

(52) Cooperative Patent Classification (CPC):
**A01B 69/00**

(86) International application number:
**PCT/JP2022/004549**

(87) International publication number:
**WO 2023/276228 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2021 JP 2021107921**

(71) Applicant: **Kubota Corporation
Osaka 556-8601 (JP)**

(72) Inventors:
• **MIYASHITA, Shunsuke
Sakai-shi, Osaka 590-0823 (JP)**
• **TAMBO, Toru
Sakai-shi, Osaka 590-0823 (JP)**
• **NAGAO, Mitsuaki
Sakai-shi, Osaka 590-0823 (JP)**

(74) Representative: **Müller-Boré & Partner
Patentanwälte PartG mbB
Friedenheimer Brücke 21
80639 München (DE)**

(54) **ROW DETECTION SYSTEM, FARM MACHINE PROVIDED WITH ROW DETECTION SYSTEM, AND ROW DETECTION METHOD**

(57) A row detection system includes: an imaging device mounted to an agricultural machine having one or more wheels, the imaging device being configured to image a ground surface that is traveled by the agricultural machine to acquire time-series images containing at least a portion of the ground surface; and a processing device configured to perform image processing for the time-series images. The processing device is configured to, from the time-series images, select a search region in which to detect at least one of crop rows and ridges, the search region having a size and shape containing at least a portion(s) of the one or more wheels.

*FIG.38*

EP 4 335 267 A1

**Description**

## TECHNICAL FIELD

The present disclosure relates to a row detection system, an agricultural machine having a row detection system, and a method of row detection.

## BACKGROUND ART

Research and development has been directed to the automation of work vehicles, such as tractors, to be used in fields. For example, work vehicles have been put to practical use which travel via automatic steering by utilizing a positioning system capable of precise positioning, e.g., GNSS (Global Navigation Satellite System). Work vehicles that automatically perform speed control as well as automatic steering have also been put to practical use.

Moreover, vision guidance systems are being developed which detect rows of crops (crop rows) or ridges in a field by using an imaging device such as a camera, and control the travel of a work vehicle along the detected crop rows or ridges.

Patent Document 1 discloses a work machine that travels along a ridge in cultivated land where crops are planted in ridges which are formed in rows. Patent Document 1 describes binarizing a raw image acquired by capturing cultivated land from obliquely above with an onboard camera, and thereafter generating a planar perspective projection image. In the technique disclosed in Patent Document 1, the planar perspective projection image is rotated to generate a number of rotated images with different orientations to detect work paths between ridges.

## CITATION LIST

## PATENT LITERATURE

[Patent Document 1] Japanese Laid-Open Patent Publication No. 2016-208871

## SUMMARY OF INVENTION

## TECHNICAL PROBLEM

In techniques of detecting "rows" (such as crop rows or ridges) by using an imaging device, the accuracy of detection may be degraded by disturbance factors such as daylighting conditions.

The present disclosure provides a row detection system, an agricultural machine having a row detection system, and a method of row detection that can solve such problems.

## SOLUTION TO PROBLEM

In an illustrative, non-limiting embodiment, a row detection system according to the present disclosure includes: an imaging device mounted to an agricultural machine having one or more wheels, the imaging device being configured to image a ground surface that is traveled by the agricultural machine to acquire time-series images containing at least a portion of the ground surface: and a processing device configured to perform row detection for the time-series images. The processing device is configured to: from the time-series images, select a search region in which to detect at least one of crop rows and ridges, the search region having a size and shape containing at least a portion (s) of the one or more wheels.

In an illustrative, non-limiting embodiment, an agricultural machine according to the present disclosure is an agricultural machine having the aforementioned row detection system, including: traveling equipment including a wheel responsible for steering; and an automatic steering device configured to control a steering angle of the wheel responsible for steering based on the positions of the crop rows or ridges as determined by the row detection system.

In an illustrative, non-limiting embodiment, a method of row detection according to the present disclosure is a computer-implemented method of row detection, the method of row detection causing a computer to execute: from an imaging device mounted to an agricultural machine having one or more wheels, acquiring time-series images by imaging a ground surface that is traveled by the agricultural machine, the time-series images containing at least a portion of the ground surface; and from the time-series images, selecting a search region in which to detect at least one of crop rows and ridges, the search region having a size and shape containing at least a portion(s) of the one or more wheels.

General or specific aspects of various example preferred embodiments of the present disclosure may be implemented using a device, a system, a method, an integrated circuit, a computer program, a non-transitory computer-readable storage medium, or any combination thereof. The computer-readable storage medium may be inclusive of a volatile storage medium, or a non-volatile storage medium. The device may include a plurality of devices. In the case where the device includes two or more devices, the two or more devices may be disposed within a single apparatus, or divided over two or more separate apparatuses.

## ADVANTAGEOUS EFFECTS OF INVENTION

According to embodiments of the present disclosure, deteriorations in detection accuracy due to disturbance factors such as daylighting conditions can be suppressed, whereby an enhanced robustness can be provided.

## BRIEF DESCRIPTION OF DRAWINGS

[FIG. 1] A diagram schematically showing how an imaging device that is mounted to an agricultural machine may image the ground surface.

[FIG. 2] A perspective view schematically showing a relationship among a body coordinate system $\Sigma b$ and a camera coordinate system $\Sigma c$ that are fixed to the agricultural machine and a world coordinate system $\Sigma w$ that is fixed to the ground surface.

[FIG. 3] A top view schematically showing a portion of a field in which a multiple crop rows are made on the ground surface.

[FIG. 4] A diagram schematically showing an example of an image that is acquired by the imaging device of the agricultural machine shown in FIG. 3.

[FIG. 5] A top view schematically showing a state where the position and orientation (angle in yaw directions) of the agricultural machine are adjusted.

[FIG. 6] A diagram showing an example of an image acquired by the imaging device of the agricultural machine in the state of FIG. 5.

[FIG. 7] A block diagram showing an example of a basic configuration of a row detection system according to a first embodiment of the present disclosure.

[FIG. 8] A block diagram schematically showing an example configuration of a processing device in the first embodiment of the present disclosure.

[FIG. 9] A monochromatic image corresponding to one frame of image, among time-series color images acquired by an onboard camera mounted on a tractor.

[FIG. 10] A diagram showing an enhanced image resulting from converting the RGB values of one frame of image among time-series color images RGB values into an excess green index (ExG=$2\times$g-r-b).

[FIG. 11] A histogram of an excess green index (ExG) in the image of FIG. 10.

[FIG. 12] A diagram showing an example of a plan view image (overhead view image) being classified into first pixels (e.g., crop pixels) and second pixels (background pixels).

[FIG. 13] A perspective view schematically showing the relative locations between: each of a camera coordinate system $\Sigma c1$ and a camera coordinate system $\Sigma c2$; and a reference plane Re.

[FIG. 14] A schematic diagram showing an example in which the direction of crop rows in a plan view image and the direction of scanning lines are parallel.

[FIG. 15] A diagram schematically showing an example of a total value histogram, as obtained with respect to the plan view image of FIG. 14.

[FIG. 16] A schematic diagram showing an example where the direction of crop rows and the direction of scanning lines intersect in a plan view image.

[FIG. 17] A diagram schematically showing an example of a total value histogram, as obtained with respect to the plan view image of FIG. 16.

[FIG. 18] A flowchart showing an example algorithm by which a processing device in an embodiment of the present disclosure determines edge lines of a crop row.

[FIG. 19] A diagram showing a total value histogram obtained from the plan view image of FIG. 12.

[FIG. 20] A block diagram showing processes that are executed by a processing device according to an embodiment of the present disclosure.

[FIG. 21] A diagram for describing an implementation in which a plan view image is split into a plurality of blocks.

[FIG. 22] A diagram schematically showing a relationship between positions of scanning lines and total values of index values for each of the blocks in FIG. 21.

[FIG. 23] A diagram showing an example of crop row centers in each of the blocks in FIG. 22 and approximation lines for the crop row centers.

[FIG. **24**] A top view showing examples of edge lines of crop rows as determined from the approximation lines in FIG. **23.**

[FIG. **25**] A diagram for describing a method which, in the case where crop rows include portions that are bent in curve shapes, splits a whole or a part of the plan view image into a plurality of blocks, and determines the positions of edge lines for each of the plurality of blocks.

[FIG. **26**] A diagram schematically showing a relationship between positions of scanning lines and total values of index values (histogram) for each of the blocks in FIG. **25.**

[FIG. **27**] A diagram showing an example of crop row centers in each of the blocks in FIG. **26** and approximation lines for the crop row centers.

[FIG. **28**] A top view showing examples of edge lines of crop rows as determined based on the approximation curves in FIG. **27.**

[FIG. **29**] A perspective view schematically showing rows of ridges made on the ground surface.

[FIG. **30**] A diagram showing an image acquired from the imaging device at time t.

[FIG. **31**] A diagram schematically showing a correspondence of feature points between an image acquired from the imaging device at time t and an image acquired at time t+1.

[FIG. **32**] A perspective view schematically showing the movements of feature points on a ridge and an intermediate region (work path) appearing in images acquired by the imaging device.

[FIG. **33**] A diagram schematically showing a relationship between: the amount of movement (first amount of movement) of a feature point projected onto the image plane; and the amount of movement (second amount of movement) of the feature point projected onto the reference plane.

[FIG. **34**] A block diagram showing processes that are executed by a processing device according to a second embodiment of the present disclosure.

[FIG. **35**] A diagram showing a relationship between a mean value of heights of feature points on a scanning line and the position of the scanning line.

[FIG. **36**] A diagram showing an example of a basic configuration of a row detection system according to a third embodiment of the present disclosure.

[FIG. **37**] A diagram showing an example of an image which the processing device has acquired from the imaging device.

[FIG. **38**] A diagram showing a portion of the image of FIG. **37.**

[FIG. **39**] A top view schematically showing a portion of the ground surface in which crop rows are made.

[FIG. **40**] A diagram schematically showing a positional relationship between: points **P3** and **P4** which are contained in portions of front wheels appearing in an image; and corresponding points **P3'** and **P4'** on the reference plane **Re.**

[FIG. **41**] A perspective view showing an example appearance of an agricultural machine according to an embodiment of the present disclosure.

[FIG. **42**] A side view schematically showing an example of the agricultural machine to which an implement is attached.

[FIG. **43**] A block diagram showing an example of a schematic configuration of an agricultural machine and an implement.

## DESCRIPTION OF EMBODIMENTS

Hereinafter, preferred embodiments of the present disclosure will be described more specifically. Note however that unnecessarily detailed descriptions may be omitted. For example, detailed descriptions on what is well known in the art or redundant descriptions on what is substantially the same configuration may be omitted. This is to avoid lengthy description, and facilitate the understanding of those skilled in the art. The accompanying drawings and the following description, which are provided by the present inventors so that those skilled in the art can sufficiently understand the present disclosure, are not intended to limit the scope of claims. In the following description, component elements having identical or similar functions are denoted by identical reference numerals.

The following preferred embodiments are only exemplary, and the technique according to the present disclosure is not limited to the following preferred embodiments. For example, numerical values, shapes, materials, steps, and orders of steps, layout of a display screen, etc., that are indicated in the following preferred embodiments are only exemplary, and admit of various modifications so long as it makes technological sense. Any one implementation may be combined with another so long as it makes technological sense to do so.

As used in the present disclosure, an "agricultural machine" broadly includes any machine that performs basic tasks of agriculture, e.g., "tilling", "planting", and "harvesting", in fields. An agricultural machine is a machine that has a functionality and structure to perform agricultural operations such as tilling, seeding, preventive pest control, manure spreading, planting of crops, or harvesting for the ground surface within a field. Such agricultural work, tasks, or operations may be referred to as "groundwork", or simply as "work", "tasks", or "operations". An agricultural machine does not need to possess traveling equipment for itself to move, but may travel by being attached to or towed by another vehicle that possesses traveling equipment. Not only does a work vehicle, such as a tractor, function as an "agricultural machine" by itself alone, but an implement that is attached to or towed by a work vehicle and the work vehicle may as a whole function as one "agricultural machine". Examples of agricultural machines include tractors, vehicles for crop management, vegetable transplanters, mowers, and field-moving robots.

(Embodiment 1)

A row detection system and a method of row detection according to an illustrative first embodiment of the present disclosure will be described. In the present embodiment, detection of crop rows is performed as a "row detection".

A row detection system according to the present embodiment includes an imaging device to be mounted to an agricultural machine in use. The imaging device is fixed to an agricultural machine so as to image the ground surface to be traveled by the agricultural machine, and to acquire time-series color images containing at least a portion of the ground surface.

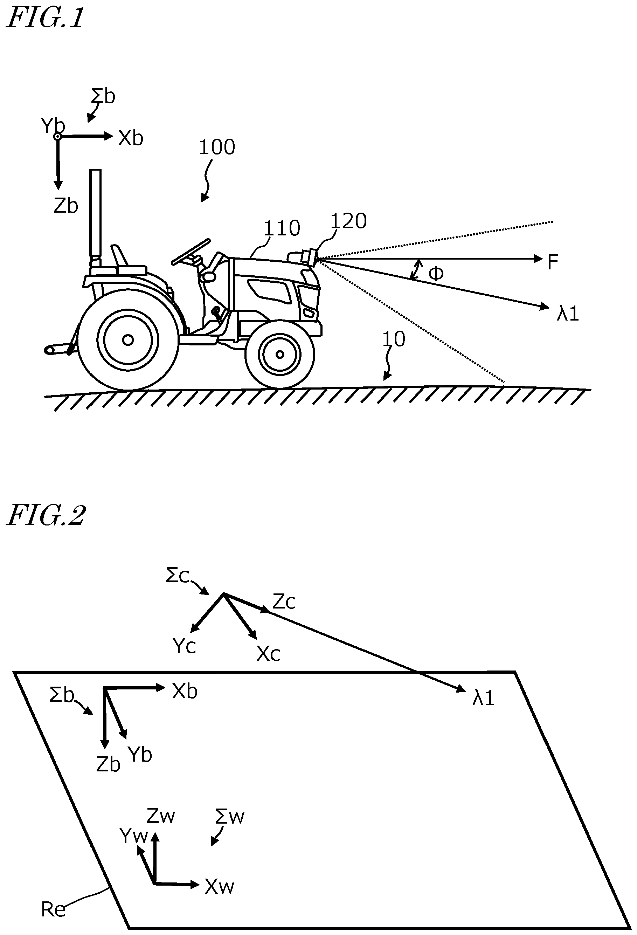

FIG. **1** schematically shows how an imaging device **12** that is mounted to an agricultural machine **100** such as a tractor or a vehicle for crop management may image the ground surface **10,** for example. In the example of FIG. **1,** the agricultural machine **100** includes a vehicle body **110** that is capable of traveling, and the imaging device **120** is fixed to the vehicle body **110.** For referencing sake, FIG. **1** shows a body coordinate system $\Sigma b$ having an Xb axis, a Yb axis, and a Zb axis that are orthogonal to one another. The body coordinate system $\Sigma b$ is a coordinate system that is fixed to the agricultural machine **100,** and the origin of the body coordinate system $\Sigma b$ may be set near the centroid of the agricultural machine **100,** for example. In the figure, for ease of viewing, the origin of the body coordinate system $\Sigma b$ is illustrated as lying external to the agricultural machine **100.** In the body coordinate system $\Sigma b$ according to the present disclosure, the Xb axis coincides with the traveling direction (direction of arrow **F**) when the agricultural machine **100** is traveling straight. When viewing from the coordinate origin in the positing direction along the Xb axis, the Yb axis coincides with the directly right direction, and the Zb axis coincides with the vertically downward direction.

The imaging device **120** is, for example, an onboard camera that includes a CCD (Charge Coupled Device) or a CMOS (Complementary Metal Oxide Semiconductor) image sensor. The imaging device **120** according to the present embodiment is a monocular camera that is capable of capturing motion pictures at a frame rate of 3 frames/second (fps: frames per second) or above, for example.

FIG. **2** is a perspective view schematically showing a relationship among the aforementioned body coordinate system $\Sigma b$, a camera coordinate system $\Sigma c$ of the imaging device **120,** and a world coordinate system $\Sigma w$ that is fixed to the ground surface **10.** The camera coordinate system $\Sigma c$ has an Xc axis, a Yc axis, and a Zc axis that are orthogonal to one another, whereas the world coordinate system $\Sigma w$ has an Xw axis, a Yw axis, and a Zw axis that are orthogonal to one another. In the example of FIG. **2,** the Xw axis and the Yw axis of the world coordinate system **Ew** are on a reference plane **Re** that extends along the ground surface **10.**

The imaging device **120** is mounted at a predetermined position of the agricultural machine **100** so as to face in a predetermined direction. Therefore, the position and orientation of the camera coordinate system $\Sigma c$ with respect to the body coordinate system $\Sigma b$ are fixed in a known state. The Zc axis of the camera coordinate system $\Sigma c$ is on the camera optical axis $\lambda 1$. In the illustrated example, the camera optical axis $\lambda 1$ is inclined from the traveling direction **F** of the agricultural machine **100** toward the ground surface **10,** with an angle of depression $\Phi$ that is greater than 0°. The traveling direction **F** of the agricultural machine 100 is schematically parallel to the ground surface **10** along which the agricultural machine **100** is traveling. The angle of depression $\Phi$ may be set to a range of e.g. not less than 0° and not more than 60°. In the case where the position at which the imaging device **120** is mounted is close to the ground surface **10,** the orientation of the camera optical axis $\lambda 1$ may be set so that the angle of depression $\Phi$ has a negative value, that is, a positive angle of elevation.

When the agricultural machine **100** is traveling on the ground surface **10,** the body coordinate system $\Sigma b$ and the camera coordinate system $\Sigma c$ translate relative to the world coordinate system $\Sigma w$. If the agricultural machine **100** rotates or swings in directions of pitch, roll, and yaw during travel, the body coordinate system $\Sigma b$ and the camera coordinate system $\Sigma c$ may rotate relative to the world coordinate system $\Sigma w$. In the following description, for simplicity, it is assumed that the agricultural machine **100** does not rotate in pitch and roll directions and that the agricultural machine **100** moves essentially parallel to the ground surface **10.**

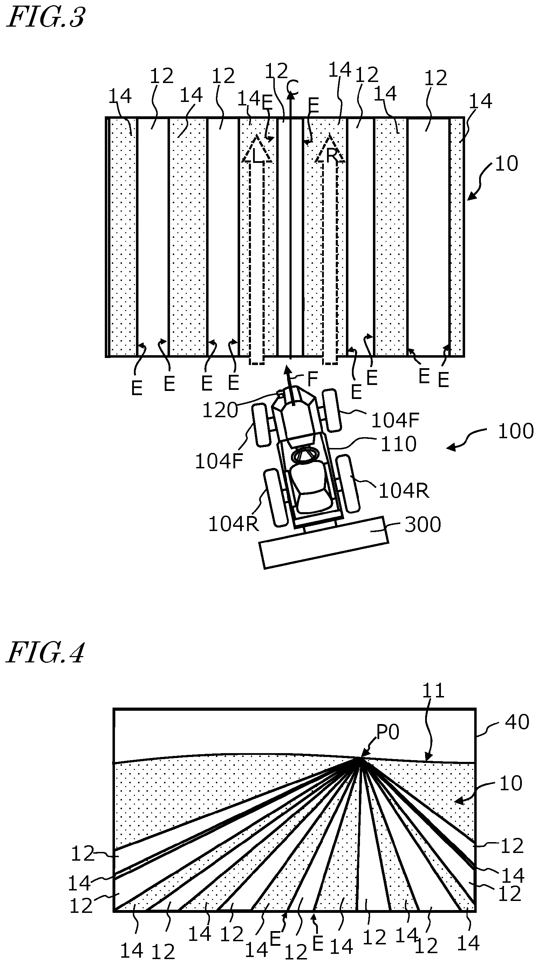

FIG. **3** is a top view schematically showing a portion of a field in which a multiple crop rows **12** are made on the ground surface **10.** A crop row **12** is a row that is formed as crops are continuously planted on the ground surface **10** of the field in one direction. In other words, a crop row **12** is an aggregation of crops that are planted in a ridge of the field. Thus, because each individual crop row **12** is a row that is created by an aggregation of crops that have been planted in the field, strictly speaking, the shape of a crop row may be complex depending on the shapes of crops and the arrangement of crops. The width of the crop row **12** changes with crop growth. Between adjacent crop rows **12,** a belt-shaped intermediate region **14,** in which no crops have been planted, exists. In between two adjacent crop rows **12,** each intermediate region **14** is a region that is interposed between two opposing edge lines **E.** In the case where multiple crops are planted for one ridge in a width direction of the ridge, multiple crop rows **12** will be formed upon the one ridge. In other words, multiple crop rows **12** will be formed within the width of the ridge. In such a case, among the multiple crop rows **12** that are formed on the ridge, an edge line **E** of the crop row **12** that is located at an end of the width direction of the ridge serves as a delineator of an intermediate region **14**. In other words, an intermediate region **14** lies between the edge lines **E** of crop rows **12** that are located at ends of ridges along the width direction, among the edge lines **E** of multiple crop rows **12**. Since an intermediate region **14** functions as a region (work path) through which the wheels of the agricultural machine **100** may pass, an "intermediate region" may be referred to as a "work path".

In the present disclosure, an "edge line" of a crop row means a reference line segment (which may also include a curve) for defining a target path for an agricultural machine to travel. Such reference line segments may be defined as both ends of a belt-like region (work path) through which the wheels of the agricultural machine are allowed to pass. The specific method of determining the "edge lines" of a crop row will be described later.

FIG. **3** schematically depicts an agricultural machine **100** that is about to enter into a field in which crop rows **12** are made. The agricultural machine **100** includes right and left front wheels **104F** and right and left rear wheels **104R** as traveling equipment, and is towing an implement **300**. The front wheels **104F** are the wheels responsible for steering.

In the example of FIG. **3**, thick broken-lined arrows **L** and **R** are indicated for the respective work paths **14** that are located on opposite sides of a crop row **12** in the middle. When the agricultural machine **100** travels on a target path that is indicated by a solid-lined arrow **C**, the front wheels **104F** and the rear wheels **104R** of the agricultural machine **100** are expected to move along the arrows **L** and **R** in the work paths **14**, so as not to step on the crop row **12**. In the present embodiment, because the edge lines **E** of the crop row **12** can be detected by using the imaging device **120** mounted to the agricultural machine **100**, it is possible to control the steering and travel of the agricultural machine **100** so that the front wheels **104F** and the rear wheels **104R** will move along arrows **L** and **R** in the work paths **14**. Controlling the steering and travel of the agricultural machine **100** based on the edge lines **E** of the crop row in this manner may be referred to as "row-following control".

FIG. **4** is a diagram schematically showing an example of an image **40** that is acquired by the imaging device **120** of the agricultural machine **100** shown in FIG. **3**. Theoretically, the multiple crop rows **12** and intermediate regions (work paths) **14** extending in parallel on the ground surface **10** intersect at a vanishing point **P0** on the horizon **11**. The reason why the vanishing point **P0** is located in a right-hand region of the image **40** is that, as shown in FIG. **3**, the traveling direction **F** of the agricultural machine **100** is inclined from the direction in which the crop rows **12** extend (a direction parallel to arrow **C**).

In the present embodiment, by a method described below, even if the daylighting conditions or the growth state of crops changes, it is possible to accurately detect the crop rows **12** from such an image **40** and determine edge lines **E** of the crop rows **12**. Then, based on the edge lines **E**, a path in which the agricultural machine **100** should proceed (target path) can be appropriately generated. As a result, through automatic steering, it becomes possible to control the travel of the agricultural machine **100** so that the front wheels **104F** and the rear wheels **104R** of the agricultural machine **100** will move along arrows **L** and **R** within the work paths **14** (row-following control). Through such row-following control, a precise automatic steering that is adapted to the state of growth of crops can be achieved which cannot be attained by automatic steering techniques that utilize GNSS or other positioning systems.

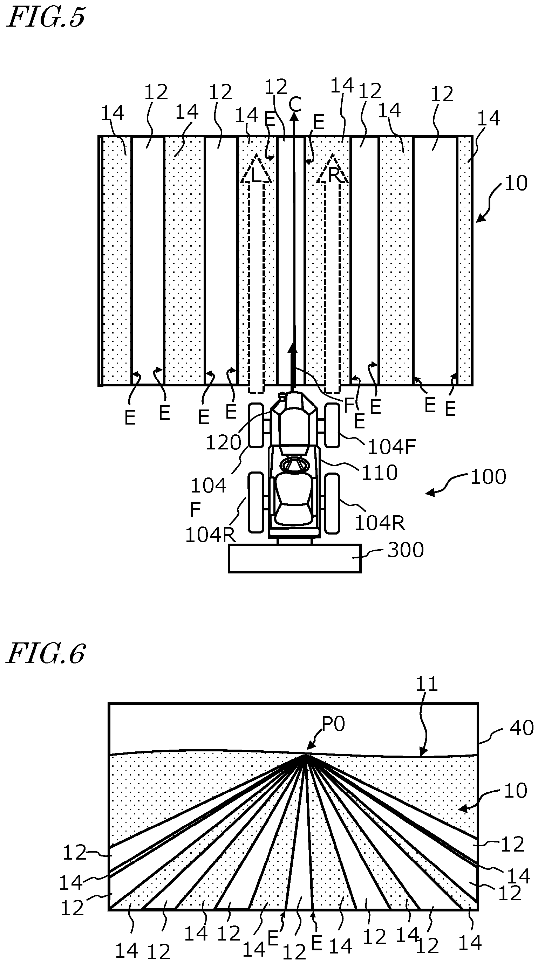

FIG. **5** is a top view schematically showing a state where the agricultural machine **100** is steered to reduce the positional error with respect to a target path (arrow **C**), thereby adjusting the position and orientation (angle in yaw directions) of the agricultural machine **100**. FIG. **6** is a diagram showing an example of an image **40** acquired by the imaging device **120** of the agricultural machine **100** in such a state. The front wheels **104F** and the rear wheels **104R** of the agricultural machine **100** in the state of FIG. **5** are respectively located on lines in work paths **14** indicated by arrow **L** and arrow **R**. When the agricultural machine **100** travels along a target path **C** indicated by central arrow **C**, the automatic steering device in the agricultural machine **100** controls the steering angles of the wheels responsible for steering so that the front wheels **104F** and the rear wheels **104R** will not mistrack from the work paths **14**.

Hereinafter, the configuration and operation of a row detection system according to an embodiment of the present disclosure will be described in detail.

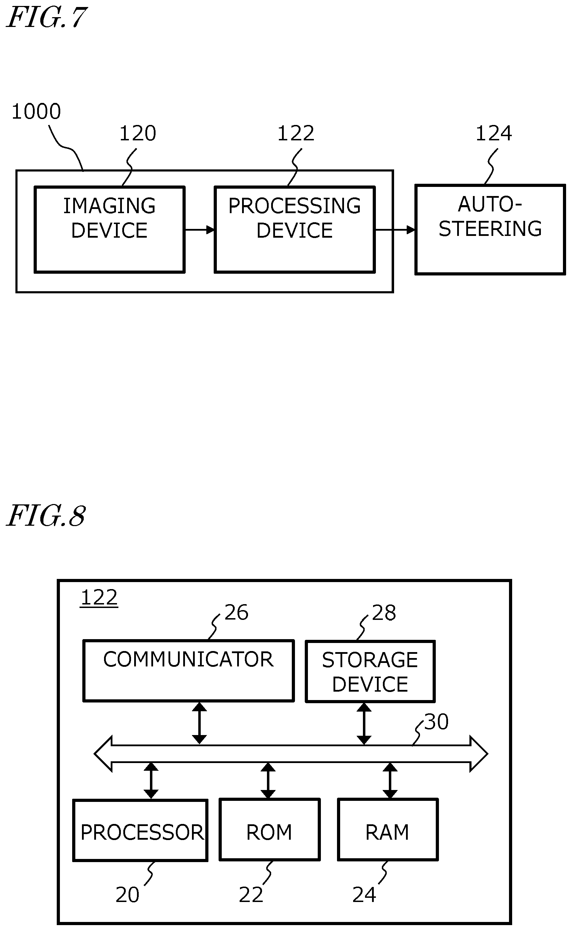

As shown in FIG. **7**, a row detection system **1000** according to the present embodiment includes: the aforementioned imaging device **120**; and a processing device **122** which performs image processing for time-series color images that are acquired from the imaging device **120**. The processing device **122** may be connected to an automatic steering device **124** which is included in the agricultural machine **100**, for example. The automatic steering device **124** is included in a self-driving device that controls the travel of the agricultural machine **100**, for example.

The processing device **122** can be implemented by an electronic control unit (ECU) for image recognition. The ECU is a computer for onboard use. The processing device **122** is connected to the imaging device **120** via serial signal lines, e.g., a wire harness, so as to receive image data that is output from the imaging device **120**. A portion of the image recognition processing that is performed by the processing device **122** may be performed inside the imaging device **120** (inside a camera module).

FIG. **8** is a block diagram showing an example hardware configuration of the processing device **122**. The processing device **122** includes a processor **20,** a ROM (Read Only Memory) **22,** a RAM (Random Access Memory) **24,** a communicator **26,** and a storage device **28.** These component elements are connected to one another via buses **30.**

The processor **20** is a semiconductor integrated circuit, and referred to also as a central processing unit (CPU) or a microprocessor. The processor **20** may include an image processing unit (GPU). The processor **20** consecutively executes a computer program describing predetermined instructions, which is stored in the ROM **22,** to realize processing that is needed for the row detection according to the present disclosure. A whole or a part of the processor **20** may be an FPGA (Field Programmable Gate Array), an ASIC (Application Specific Integrated Circuit), or an ASSP (Application Specific Standard Product) in which a CPU is mounted.

The communicator **26** is an interface for performing data communication between the processing device **122** and an external computer. The communicator **26** can perform wired communication based on a CAN (Controller Area Network) or the like, or wireless communication complying with the Bluetooth (registered trademark) standards and/or the Wi-Fi (registered trademark) standards.

The storage device **28** is able to store data of images acquired from the imaging device **120** or images which are under processing. Examples of the storage device **28** include a hard disk drive and a non-volatile semiconductor memory.

The hardware configuration of the processing device **122** is not limited to the above examples. A whole or a part of the processing device **122** does not need to be mounted on the agricultural machine **100.** By utilizing the communicator **26,** one or more computers located outside the agricultural machine **100** may be allowed to function as a whole or a part of the processing device **122.** For example, a server computer that is connected to a network may function as a whole or a part of the processing device **122.** On the other hand, a computer mounted in the agricultural machine **100** may perform all functions that are required of the processing device **122.**

In the present embodiment, such a processing device **122** acquires time-series color images from the imaging device **120,** and performs operations S1, S2 and S3 below.

(S1) from time-series color images, generate an enhanced image in which the color of a crop row for detection is enhanced.

(S2) from the enhanced image, generate a plan view image as viewed from above the ground surface, the plan view image being classified into first pixels of which a color index value for the crop row is equal to or greater than a threshold and second pixels of which this index value is below the threshold.

(S3) based on the index values of the first pixels, determine the positions of edge lines of the crop row.

Hereinafter, specific examples of operations S1, S2 and S3 will be described in detail.

The time-series color images are an aggregation of images that are chronologically acquired by the imaging device **120** through imaging. Each image is composed of a frame-by-frame group of pixels. For example, when the imaging device **120** outputs images at a frame rate of 30 frames/second, the processing device **122** is able to acquire new images with a period of about 33 milliseconds. As compared to the speed of a common automobile that travels on public roads, the agricultural machine **100,** such as a tractor, travels in a field at a speed which is relatively low, e.g., about 10 kilometers per hour or lower. In the case of 10 kilometers per hour, a distance of about 6 centimeters is travelled in about 33 milliseconds. Therefore, the processing device **122** may acquire images with a period of e.g. about 100 to 300 milliseconds, and does not need to process every frame of image captured by the imaging device **120.** The period with which images to be processed by the processing device **122** are acquired may be automatically changed by the processing device **122** in accordance with the traveling speed of the agricultural machine **100.**

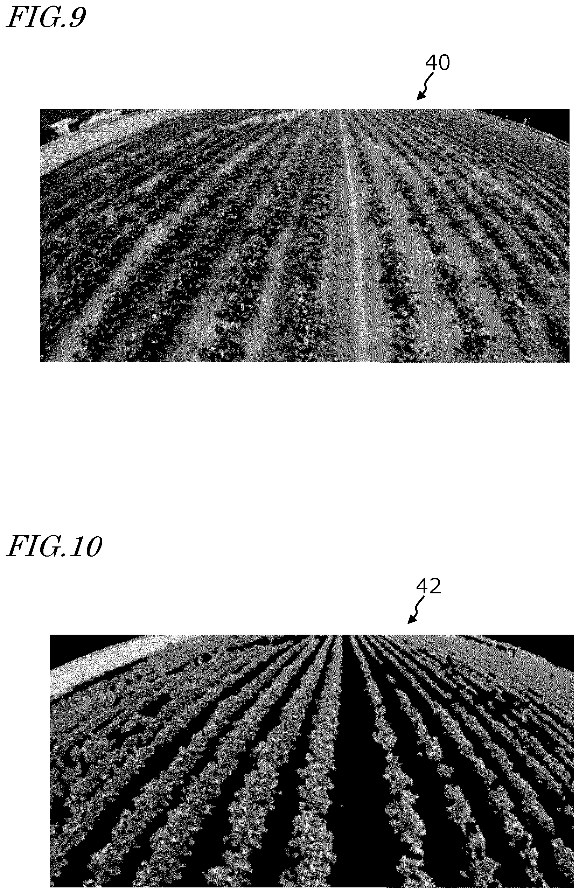

FIG. **9** is an image corresponding to one frame of image **40,** among time-series color images that have been acquired by an imaging device mounted on the agricultural machine (which in this example is a monocular camera). Rows of crops (crop rows) appear in the image of FIG. **9,** which are planted in the form of rows on the ground surface of a field. In this example, the rows of crops are arranged essentially in parallel and at equal intervals on the ground surface, such that the camera optical axis of the imaging device is in the traveling direction of the agricultural machine. As described earlier, the camera optical axis does not need to be parallel to the traveling direction of the agricultural machine, but may meet the ground surface frontward of the traveling direction of the agricultural machine. The mounted position of the imaging device is not limited to this example. In the case where a plurality of imaging devices are mounted to the agricultural machine, some of the imaging device may have their camera optical axes oriented in an opposite direction to the traveling direction, or in a direction intersecting the traveling direction.

In operation S1, based on time-series color images that have been acquired from the imaging device **120,** the processing device **122** in FIG. **7** generates an image (enhanced image) in which the color of a crop row for detection is enhanced. Crops perform photosynthesis with sunlight (white light), and therefore contain chlorophyll. Chlorophyll has a lower optical absorption rate for green than for red or blue. Therefore, the spectrum of sunlight that is reflected by a crop shows a relatively high value in the green wavelength range, as compared to the spectrum of sunlight that is reflected from the soil surface. As a result, the crop color generally contains plenty of green components, and thus a typical example of the "color of the crop row" is green. However, as will be described below, the "color of the crop row" is not limited to green.

The image sensor in the imaging device **120** includes a multitude of photodetection cells that are arranged in rows and columns. Each individual photodetection cell corresponds to one of the pixels that constitute an image, and includes an R subpixel to detect the intensity of red light, a G subpixel to detect the intensity of green light, and a B subpixel to detect the intensity of blue light. The light outputs to be detected by the R subpixel, the G subpixel, and the B subpixel of each photodetection cell may be referred to as an R value, a G value, and a B value, respectively. Hereinafter, an R value, a G value, and a B value may be collectively referred to as "pixel values" or "RGB values". By using an R value, a G value, and a B value, it is possible to define a color based on coordinate values within an RGB color space.

In the case where the color of a crop row for detection is green, an enhanced image in which the color of a crop row is enhanced is an image resulting from: converting the RGB values of each pixel of a color image acquired by the imaging device into pixel values having a relatively large weight on the G value. Such pixel value conversion for generating an enhanced image may be defined as "(2×G value-R value-B value)/(R value+G value +B value)", for example. Herein, the (R value+G value +B value) in the denominator is a factor for normalization. Hereinafter, normalized RGB values will be referred to as rgb values, which are defined as: r=R value/(R value+G value+B value); g=G value/(R value+G value +B value); and b=B value/(R value+G value +B value). Note that "2×g-r-b" is called an excess green index (ExG: Excess Green Index).

FIG. **10** is a diagram showing an enhanced image **42** resulting from converting the RGB values of the image of FIG. **9** into "2×g-r-b". Through this conversion, in the image **42** of FIG. **10,** any pixel whose "r+b" is smaller than g is displayed brighter, and any pixel whose "r+b" is larger than g is displayed darker. Through this conversion, an image (enhanced image) **42** in which the color of a crop row for detection (i.e., "green" in this example) is enhanced is obtained. Any pixel which is relatively bright in the image of FIG. **10** is a pixel having a relatively large green component, and belongs to the crop region.

As the "color index value" regarding which the color of the crop is to be enhanced, any index other than the excess green index (ExG) may also be used, e.g., a green red vegetation index (G value-R value)/(G value +R value). In the case where the imaging device can also function as an infrared camera, NDVI (Normalized Difference Vegetation Index) may be used as the "color index value for the crop row".

There may be cases where each crop row is covered by a sheet called "mulch" (mulching sheet). In such cases, the "color of the crop row" is the "color of objects that are arranged in rows covering the crops". Specifically, when the sheet color is black, which is an achromatic color, the "color of the crop row" means "black". When the sheet color is red, the "color of the crop row" means "red". Thus, the "color of the crop row" may mean not only the color of the crops themselves, but also the color of the region defining the crop row (i.e., a color that is distinguishable from the color of the soil surface).

The generation of an enhanced image in which the "color of the crop row" is enhanced may utilize conversion from an RGB color space into an HSV color space. An HSV color space is a color space that is constituted by the three components of hue, saturation, and value. Using color information obtained by converting from an RGB color space into an HSV color space makes it possible to detect a "color" with low saturation, such as black or white. In the case of utilizing an OpenCV library to detect "black", the hue may be set to the maximum range (0-179), the saturation may be set to the maximum range (0-255), and the value range may be set to 0-30. In order to detect "white", the hue may be set to the maximum range (0-179), the saturation may be set to the maximum range (0-255), and the value range may be set to 200-255. Any pixel that has a hue, a saturation, and a value falling within such setting ranges is a pixel having the color to be detected. In the case of detecting a green pixel, for example, the hue range may be set to a range of e.g. 30-90.

Generating an image in which the color of a crop row for detection is enhanced (enhanced image) makes it easy to distinguish (i.e., extract) crop row regions from the remaining background regions (segmentation).

Next, operation S2 will be described.

In operation S2, from the enhanced image **42,** the processing device **122** generates a plan view image being classified into first pixels of which a color index value for the crop row is equal to or greater than a threshold and second pixels of which this index value is below the threshold. The plan view image is an image as viewed from above the ground surface.

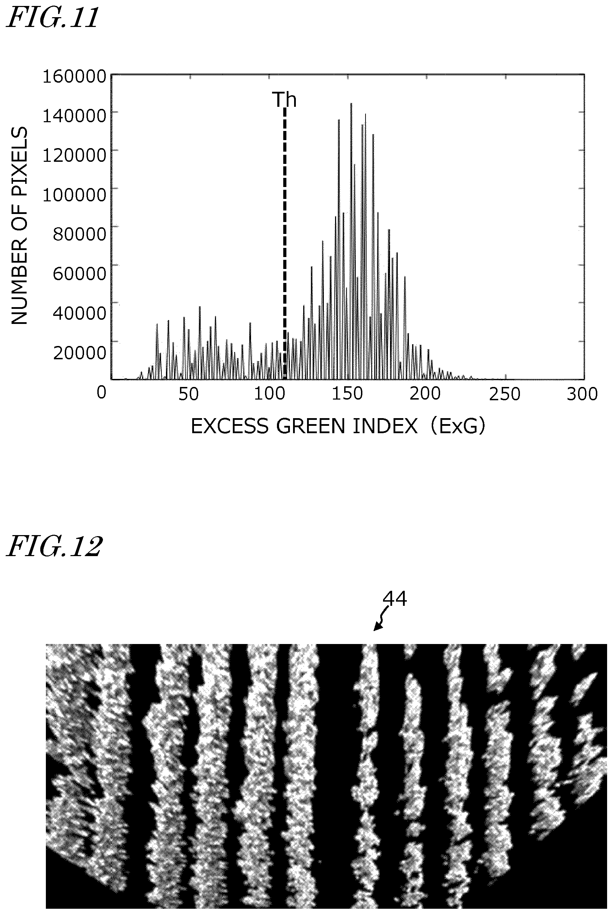

In the present embodiment, as a color index value for the crop row, the aforementioned excess green index (ExG) is adopted, and a discriminant analysis method (Otsu's binarization) is used to determine a discrimination threshold. FIG. **11** is a histogram of an excess green index (ExG) in the enhanced image **42** of FIG. **10**. In the histogram, the horizontal axis represents the excess green index (ExG), and the vertical axis represents the number of pixels in the image (corresponding to frequency of occurrence). In FIG. **11**, a broken line is shown indicating a threshold **Th** that is calculated by the discriminant analysis algorithm. Against this threshold **Th**, the pixels in the enhanced image **42** are classified into two class. The right side of the broken line indicating the threshold **Th** shows the frequency of occurrence of pixel whose excess green index (ExG) is equal to or greater than the threshold, these pixels being estimated as belonging to a crop class. On the other hand, the left side of the broken line indicating the threshold **Th** shows the frequency of occurrence of pixels whose excess green index (ExG) is below the threshold, these pixels being estimated as belonging to a non-crop class, e.g., the soil. In this example, the first pixels, i.e., the pixels whose index value is equal to or greater than the threshold, correspond to "crop pixels". On the other hand, the second pixels, whose index value is below the threshold, correspond to "background pixels". The background pixels correspond to objects other than those for detection, e.g., the soil surface, and the aforementioned intermediate regions (work paths) **14** may be constituted by background pixels. Note that the method of threshold determination is not limited to the above examples; for example, other methods utilizing machine learning may be used to determine the threshold.

By assigning each of the pixels constituting the enhanced image **42** as either a "first pixel" or a "second pixel", it becomes possible to extract a region for detection from the enhanced image **42**. Also, by giving "zero" to the pixel value of any "second pixel", or removing the second pixel data from the image data, it becomes possible to mask any region other than the regions for detection. When finalizing the regions to be masked, it may be possible to perform a process of including any pixel whose excess green index (ExG) exhibits a locally high value, as a noise, into the masked regions.

FIG. **12** is a diagram showing an example of a plan view image **44** being classified into first pixels and second pixels, as viewed from above the ground surface. The plan view image **44** of FIG. **12** is an image that is generated from the enhanced image **42** of FIG. **10** by an image transformation technique described below. In the plan view image **44,** the second pixels whose color index value for the crop row (which in this example is the excess green index) is below the threshold **Th** are black pixels (pixels whose value is set to zero). The regions which are constituted by second pixels are mainly regions where the surface of the soil on the ground surface is visible. In the plan view image **44** of FIG. **12,** black triangular regions exist at right and left corners which are tangent to the bottom side. These triangular regions correspond to regions which do not appear in the enhanced image **42** of FIG. **10**. Note that, in the image **40** of FIG. **9** and the enhanced image **42** of FIG. **10,** a phenomenon where lines that would actually be straight lines are distorted in peripheral portions of the image is observed. Such image distortion is ascribable to the performance of the camera lenses, and may be corrected by using internal parameters of the camera. Processes such as enhancement of the crop regions, masking, and distortion correction may be referred to as preprocessing. The preprocessing may also include processes other than these processes.

The plan view image **44** of FIG. **12** is an overhead view image in which a reference plane **Re** that is parallel to the ground surface is viewed directly from above along the normal direction of the reference plane **Re.** This overhead view image can be generated from the enhanced image **42** of FIG. **10** through homography transformation (planar perspective projection). Homography transformation is a kind of geometric transformation where a point that is on a given plane in a three-dimensional space can be converted to a point that is on another arbitrary plane.

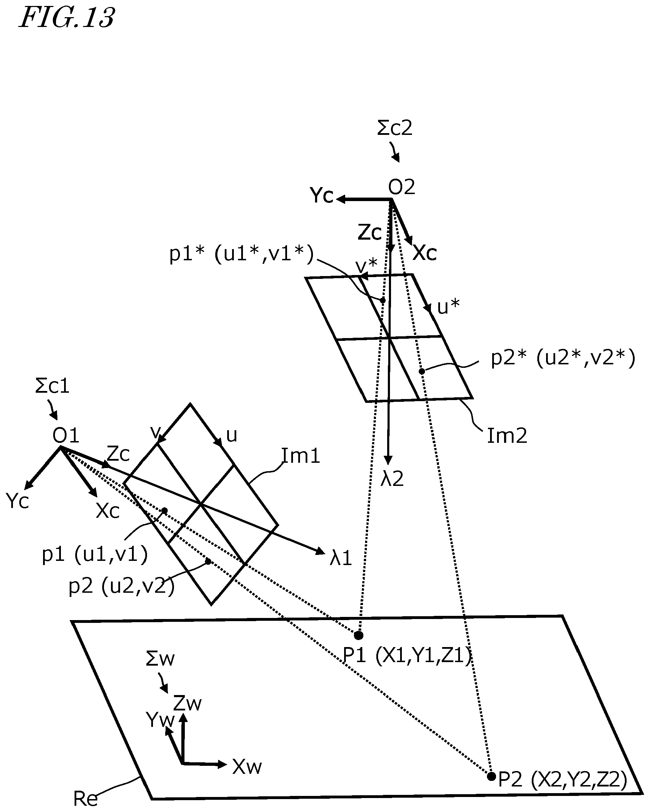

FIG. **13** is a perspective view schematically showing the relative locations between: each of a camera coordinate system $\Sigma c1$ of an imaging device that has a first pose (position and orientation) and a camera coordinate system $\Sigma c2$ of an imaging device that has a second pose; and the reference plane **Re.** In the illustrated example, the camera coordinate system $\Sigma c1$ is inclined so that its Zc axis obliquely intersects the reference plane **Re.** An imaging device having the first pose corresponds to an imaging device that is mounted to the agricultural machine. On the other hand, the camera coordinate system $\Sigma c2$ has its Zc axis lying orthogonal to the reference plane **Re.** Stated otherwise, the camera coordinate system $\Sigma c2$ is placed in a state that allows for acquiring an overhead view image in which the reference plane **Re** is viewed directly from above along the normal direction of the reference plane **Re.**

At a position that is distant from an origin **O1** of the camera coordinate system $\Sigma c1$ by the focal length of the camera along the Zc axis, an imaginary image plane **Im1** exists. The image plane **Im1** is orthogonal to the Zc axis and the camera optical axis $\lambda 1$. A pixel position on the image plane **Im1** is defined by an image coordinate system having a u axis and a v axis that are orthogonal to each other. For example, a point **P1** and a point **P2** located on the reference plane **Re** may have coordinates (X1,Y1,Z1) and (X2,Y2,Z2) in the world coordinate system $\Sigma w,$ respectively. In the example of FIG. **13,** the Xw axis and the Yw axis of the world coordinate system **Ew** are on the reference plane **Re.** Therefore, Z1=Z2=0. The reference plane **Re** is set so as to expand along the ground surface.

Through perspective projection based on a pinhole camera model, the point **P1** and the point **P2** on the reference plane **Re** are converted, respectively, into a point **p1** and a point **p2** on the image plane **Im1** of the imaging device having the first pose. On the image plane **Im1,** the point **p1** and the point **p2** are at pixel positions indicated by coordinates (u1,v1) and (u2,v2), respectively.

When the imaging device has the second pose, an imaginary image plane **Im2** exists at a position that is distant from an origin **O2** of the camera coordinate system $\Sigma c2$ by the focal length of the camera along the Zc axis. In this example, the image plane **Im2** is parallel to the reference plane **Re.** A pixel position on the image plane **Im2** is defined by an image coordinate system having a u* axis and a v* axis that are orthogonal to each other. Through perspective projection, a point **P1** and a point **P2** on the reference plane **Re** are converted, respectively, into a point **p1\*** and a point **p2\*** on the image plane **Im2.** On the image plane **Im2,** the point **p1\*** and point **p2\*** are at pixel positions indicated by coordinates (u1\*,v1\*) and (u2\*,v2\*), respectively.

Once the relative locations of the camera coordinate systems $\Sigma c1$ and $\Sigma c2$ with respect to the reference plane **Re** (world coordinate system $\Sigma w$) are given, then, for a given point $(u,v)$ on the image plane **Im1**, it is possible to determine a corresponding point $(u^*,v^*)$ on the image plane **Im2** through homography transformation. When point coordinates are expressed by a homogeneous coordinate system, such homography transformation is defined by a transformation matrix H of 3 rows $\times$ 3 columns.

[eq. 1]

$$\begin{pmatrix} u* \\ v* \\ 1 \end{pmatrix} = H \begin{pmatrix} u \\ v \\ 1 \end{pmatrix}$$

The content of the transformation matrix H is defined by numerical values of hn, $h_{12}$, ..., $h_{32}$, as indicated below.

[eq. 2]

$$\begin{pmatrix} u* \\ v* \\ 1 \end{pmatrix} = \begin{pmatrix} h11 & h12 & h13 \\ h21 & h22 & h23 \\ h31 & h32 & 1 \end{pmatrix} \begin{pmatrix} u \\ v \\ 1 \end{pmatrix}$$

The eight numerical values $(h_{11}, h_{12}, ... , h_{32})$ can be calculated by a known algorithm once a calibration board that is placed on the reference plane **Re** is imaged by the imaging device **120** mounted to the agricultural machine **100.**
When a point on the reference plane **Re** has coordinates $(X,Y,0)$, the coordinates of the corresponding points on the respective camera image planes **Im1** and **Im2** are associated with the point $(X,Y,0)$ by respective homography transformation matrices H1 and H2, as indicated by the formulae of eq. 3 and eq. 4 below.

[eq. 3]

$$\begin{pmatrix} u \\ v \\ 1 \end{pmatrix} = H1 \begin{pmatrix} X \\ Y \\ 1 \end{pmatrix}$$

[eq. 4]

$$\begin{pmatrix} u* \\ v* \\ 1 \end{pmatrix} = H2 \begin{pmatrix} X \\ Y \\ 1 \end{pmatrix}$$

From the above two formulae, the following formula is derived. As is clear from this formula, the transformation matrix H is equal to $H2H1^{-1}$. $H1^{-1}$ is an inverse of H1.

[eq. 5]

$$\begin{pmatrix} u* \\ v* \\ 1 \end{pmatrix} = H2H1^{-1} \begin{pmatrix} u \\ v \\ 1 \end{pmatrix}$$

The content of the transformation matrices H1 and H2 depends on the reference plane **Re**; therefore, if the position of the reference plane **Re** changes, the content of the transformation matrix H also changes.

By utilizing such homography transformation, a plan view image of the ground surface can be generated from an image of the ground surface acquired by the imaging device having the first pose (imaging device mounted to the agricultural machine). In other words, through homography transformation, coordinates of a given point on the image plane **Im1** of the imaging device **120** can be converted into coordinates of a point that is on the image plane **Im2** of an imaginary imaging device having a predetermined pose with respect to the reference plane **Re.**

After calculating the content of the transformation matrix H, the processing device **122** executes a software program based on the aforementioned algorithm to generate, from time-series color images or preprocessed images of time-series color images, overhead view images in which the ground surface **10** is viewed from above.

In the above description, it is assumed that points (e.g., **P1, P2**) in a three-dimensional space are all located on the reference plane **Re** (e.g., Z1=Z2=0). In the case where the height of a crop with respect to the reference plane **Re** is non-zero, in the plan view image resulting after homography transformation, the position of a corresponding point will be shifted from its proper position. In order to suppress an increase in the amount of shift, it is desirable that the height of the reference plane **Re** is close to the height of the crop for detection. Bumps and dents, e.g., ridges, furrows, or trenches, may exist on the ground surface **10**. In such cases, the reference plane **Re** may be offset upward from the bottoms of such bumps and dents. The offset distance may be appropriately set depending on the bumps and dents of the ground surface **10** on which crops are planted.

While the agricultural machine **100** is traveling on the ground surface **10,** if the vehicle body **110** (see FIG. **1**) undergoes a roll or pitch motion, the pose of the imaging device **120** changes, whereby the content of the transformation matrix H1 may change. In such a case, angles of rotation of roll and pitch of the vehicle body **110** may be measured with an IMU, and the transformation matrix H1 and the transformation matrix H can be corrected in accordance with the changes in the pose of the imaging device.

By the above-described method, the processing device **122** according to the present embodiment generates a plan view image as viewed from above the ground surface, the plan view image being classified into first pixels of which a color index value for the crop row is equal to or greater than a threshold and second pixels of which this index value is below the threshold; thereafter, the processing device **122** performs operation S3.

Next, operation S3 will be described.

In operation S3, based on the index values of the first pixels, the processing device **122** determines the positions of the edge lines of the crop row. Specifically, the index values of the first pixels (i.e., pixels whose color index value is equal to or greater than a threshold) are totaled along a plurality of scanning lines in the plan view image.

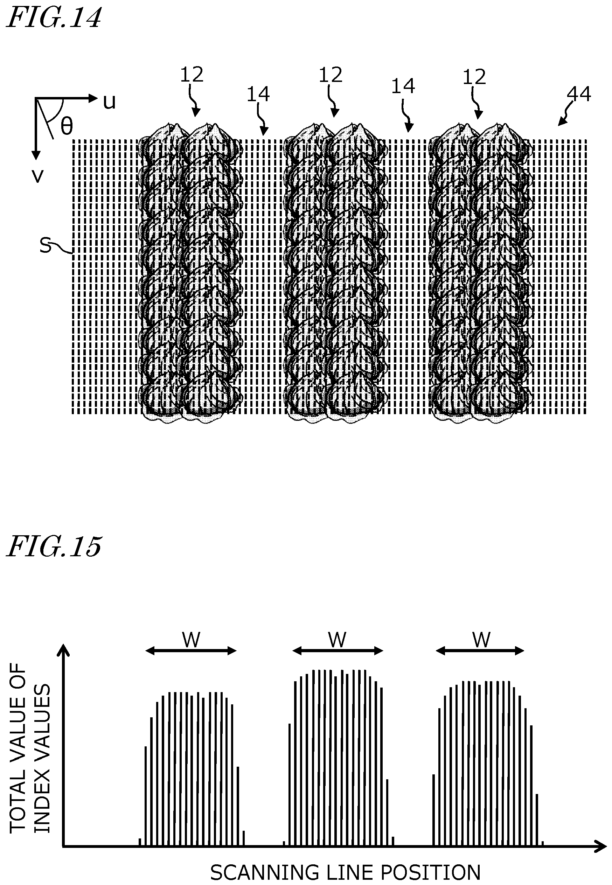

FIG. **14** is an example of a plan view image **44** in which three crop rows **12** appear. In this example, the directions of the crop rows **12** are parallel to the vertical direction in the image (v axis direction) . FIG. **14** shows a multitude of scanning lines (broken line) **S** that are parallel to the vertical direction in the image (v axis direction). The processing device **122** totals the index values of pixels that are located on the plurality of scanning lines **S** to obtain a total value for each scanning line **S.**

FIG. **15** is a diagram schematically showing a relationship between positions of scanning lines **S** and total values of index values (histogram of total values), as obtained with respect to the plan view image of FIG. **14**. In FIG. **15,** the horizontal axis represents the positions of scanning lines **S** along the horizontal direction in the image (u axis direction) . In the plan view image **44,** when many of the pixels that are crossed by a scanning line **S** are first pixels belonging to a crop row **12,** that scanning line **S** has a large total value. On the other hand, when many of the pixels that are crossed by a scanning line **S** are second pixels (background pixels) belonging to an intermediate region (work path) **14** existing between crop rows **12,** that scanning line **S** has a small total value. Note that, in the present embodiment, the intermediate regions (work paths) **14** are masked, so that the second pixels have an index value of zero.

In the histogram of FIG. **15,** there exist: concave regions whose total value is zero or near-zero; and convex regions that are distinguished by such concave regions. The concave regions correspond to intermediate regions (work paths) **14,** whereas the convex regions correspond to crop rows **12**. In the present embodiment, the positions of scanning lines **S** having total values at predetermined positions on opposite sides of a peak of total values within a convex region, specifically, those which accounts for a predetermined rate (e.g., a value chosen in a range from 60% to 90%) with respect to the peak of total values, are determined as the positions of edge lines of a crop row **12.** Both ends of an arrow **W** in FIG. **15** indicate the positions of edge lines of each crop row **12.** In the example of FIG. **15,** the positions of the edge lines of each crop row **12** are positions of scanning lines **S** having a 80% value of a peak of total values of the crop row **12.**

In the present embodiment, the second pixels are masked before color index values for the crop row is totaled upon each scanning line **S.** In other words, it is not that the number of first pixels (number of pixels) is counted in a plan view image that has been binarized based on a classification between first pixels and second pixels. In the case where the number of first pixels is counted, if a multitude of pixels (classified as first pixels) that slightly exceed the threshold Th due to fallen leaves and weeds or the like exist, for example, the count value of first pixels will increase. On the other hand, as in the embodiment of the present disclosure, totaling color index values for the crop row with respect to first pixels, rather than relying on the number of first pixels, suppresses misjudgments associated with fallen leaves or weeds, thus enhancing the robustness of row detection.

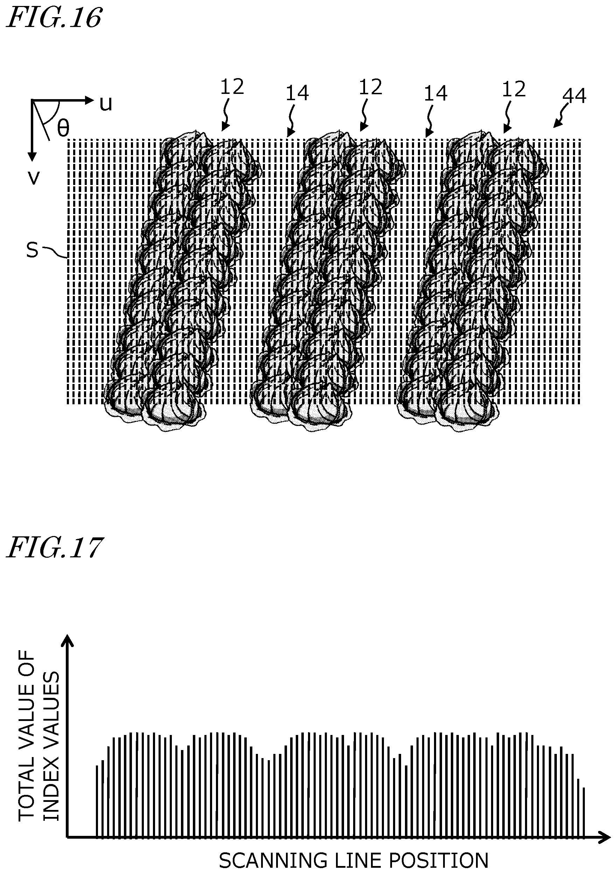

FIG. **16** shows an example of a plan view image **44** in which crop rows **12** extend obliquely. As has been described with reference to FIG. **3** and FIG. **4,** depending on the orientation of the agricultural machine **100,** the crop rows **12** may extend in directions that are inclined right or left in the image **40** acquired by the imaging device **120.** If the plan view image **44** is generated from such an image through homography transformation, as in the example of FIG. **16,** the direction of the crop rows **12** will be inclined from the vertical direction in the image (v axis direction).

FIG. **16** also shows a multitude of scanning lines (broken line) **S** that are parallel to the vertical direction in the image (v axis direction). When the processing device **122** totals the index values of pixels that are located on such a plurality of scanning lines **S** to obtain a total value for each scanning line **S,** a histogram of total values as shown in FIG. **17** may result. FIG. **17** is a diagram schematically showing a relationship between positions of scanning lines **S** and total values of index values, as obtained with respect to the plan view image of FIG. **16.** From this histogram, edge lines of the crop rows **12** cannot be determined.

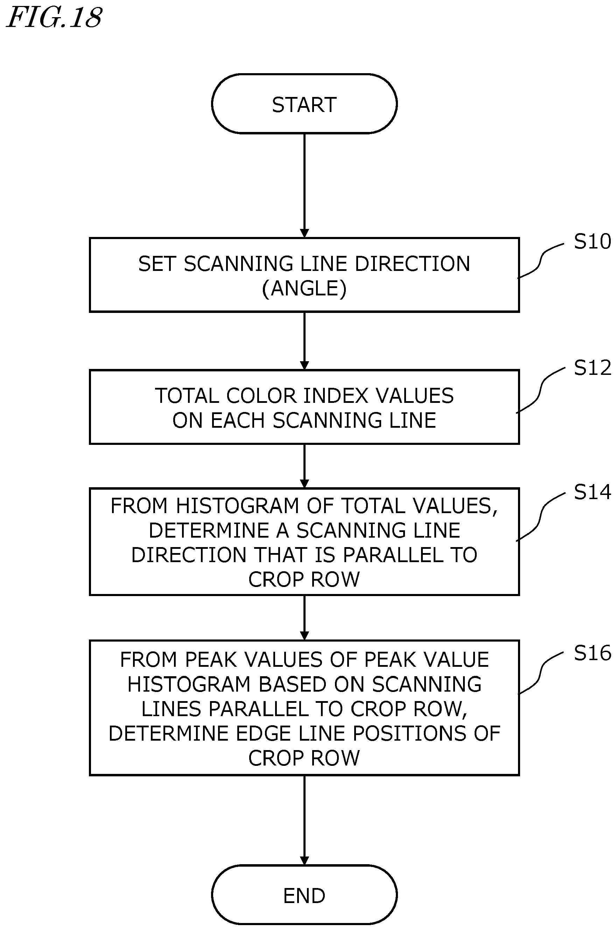

FIG. **18** is a flowchart showing an example procedure of varying the direction (angle) of scanning lines **S** in order to search for a direction (angle) of scanning lines **S** that is parallel to the direction of the crop rows **12.**

At step **S10,** a direction (angle) of the scanning lines **S** is set. Herein, clockwise angles $\theta$ are defined relative to the u axis of the image coordinate system (see FIG. **14** and FIG. **16**). The search through angles $\theta$ may be done by setting a range of e.g., 60 to 120 degrees and using angle variations of 1 degree, for example. In this case, at step **S1,** 60, 61, 62,..., 119 and 120 degrees are given as the angle $\theta$ of scanning lines **S.**

At step **S12,** index values are totaled for the pixels on any scanning line **S** extending in the direction of each angle $\theta$, thereby generating a histogram of total values. The histogram will exhibit a different distribution depending on the angle $\theta$**.**

At step **S14,** from among a plurality of histograms thus obtained, a histogram is selected that has steep boundaries between bumps and dents, e.g., as shown in FIG. **15,** such that the crop rows **12** are clearly distinguishable from the intermediate regions **14,** and the angle $\theta$ of scanning lines **S** that is conducive to that histogram is determined.

At step **S16,** from the peak values of the histogram corresponding to the angle $\theta$ determined at step **S14,** edge lines of each crop row **12** are determined. As described above, positions of scanning lines **S** having a total value that is 0.8 times the peak, for example, may be adopted as the edge lines.

Note that, when searching through directions (angles) of the scanning lines **S,** each time the angle $\theta$ is varied by 1 degree within the range of search, a histogram of total values on the scanning lines **S** at that angle $\theta$ may be generated. A feature (e.g., recess depth/protrusion height, a differential value of the envelope, etc.) may be calculated from the waveform of the histogram, and based on that feature, it may be determined whether the direction of the crop rows **12** is parallel to the direction of the scanning lines **S** or not.

Note that the method of determining the angle $\theta$ is not limited to the above examples. In the case where the direction in which the crop rows extend is known through measurements, the direction of the agricultural machine may be measured with an inertial measurement unit (IMU) mounted on the agricultural machine **100,** and its angle $\theta$ with respect to the direction in which the crop rows extend may be determined.

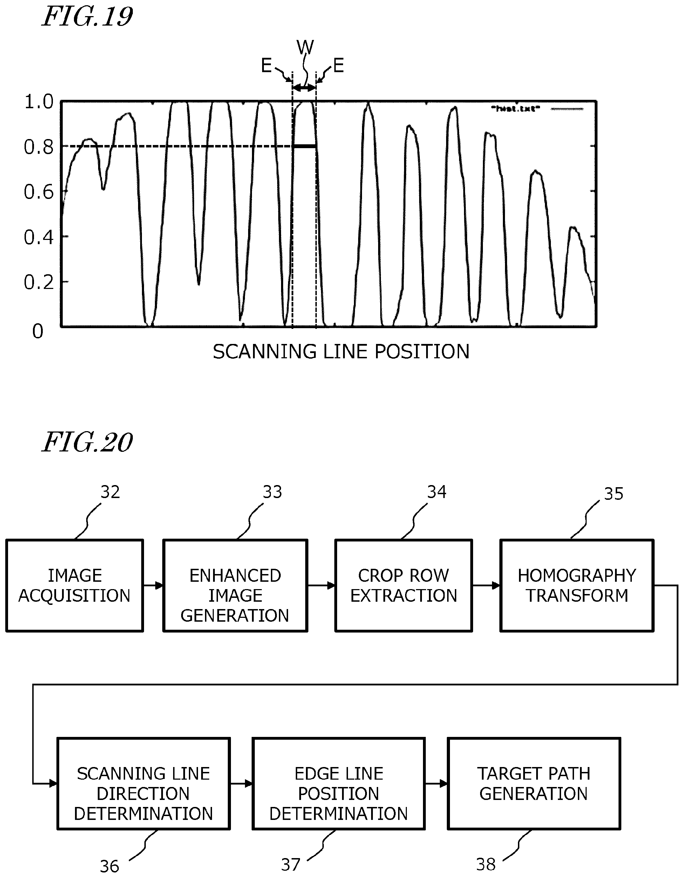

FIG. **19** is a diagram showing an example of a total value histogram that is generated by the plan view image of FIG. **12.** For a protrusion of the histogram that is located in the center, scanning line positions that are 0.8 times its peak value are determined as the positions of edge lines **E.** In this histogram, the protrusion peaks become lower and the protrusion peaks become more spread out as the scanning line positions become more distant toward the right and the left from the center. This is because: as is clear from the image of FIG. **12,** the image has little distortion at the center of the plan view image, whereas distortion of the image increases away from the center toward the right and the left; and the black triangular regions located at opposite sides of the bottom side cause a decrease in the total values.

When detection of crop rows is utilized for the traveling of the agricultural machine, the crop rows to be accurately detected are at the center of the image or its vicinity. Therefore, distortion in regions near both ends of the right-left direction of the plan view image can be ignored.

FIG. 20 is a block diagram showing a series of processes that are executed by the processing device 122 according to the present embodiment. As shown in FIG. 20, by executing an image acquisition 32, an enhanced image generation 33, a crop row extraction 34, and a homography transformation 35, the processing device 122 is able to obtain the plan view image 44 shown in FIG. 16, for example. By further executing a scanning line direction determination 36 and an edge line position determination 37, the processing device 122 is able to obtain the positions of edge lines of the crop rows. Thereafter, the processing device 122, or a path generator that has acquired information indicating the positions of the edge lines from the processing device 122, is able to execute a target path generation 38 for the agricultural machine, on the basis of the edge lines. A target path may be generated such that wheels that are included in the agricultural machine are maintained within an intermediate region (work path) 14 that is interposed between the edge lines E. For example, a target path may be generated such that the central portion along the width direction of any tire passes through the center between two edge lines that are located at both ends of an intermediate region (work path) 14. With such a target path, even if the agricultural machine goes off the target path during travel by about several centimeters, the tires are less likely to go into a crop row.

It has been confirmed that, according to embodiments of the present disclosure, crop row detection with high accuracy is possible by suppressing the influences of forward light, backlight, sunny weather, cloudy weather, fog, and other weather conditions, or daylighting conditions that vary depending on the time zone of work. It has also been confirmed that crop row detection with high robustness is possible even when there is a change in the kind of crop (cabbage, broccoli, radish, carrot, lettuce, Chinese cabbage, etc.), growth state (from seedling to fully grown), presence/absence of diseases, presence/absence of fallen leaves or weeds, and soil color.

In the above embodiment, thereafter homography transformation is executed after performing a step of determining a binarization threshold and extracting crop regions based on pixels at a threshold or above. However, the step of extracting crop regions may be performed after homography transformation. Specifically, in the series of processes shown in FIG. 20, the homography transformation 35 may be executed between the enhanced image generation 33 and the crop row extraction 34, or executed between the image acquisition 32 and the enhanced image generation 33.

Hereinafter, a modified example of the method of row detection to be performed by a crop detection system according to the present disclosure will be described.

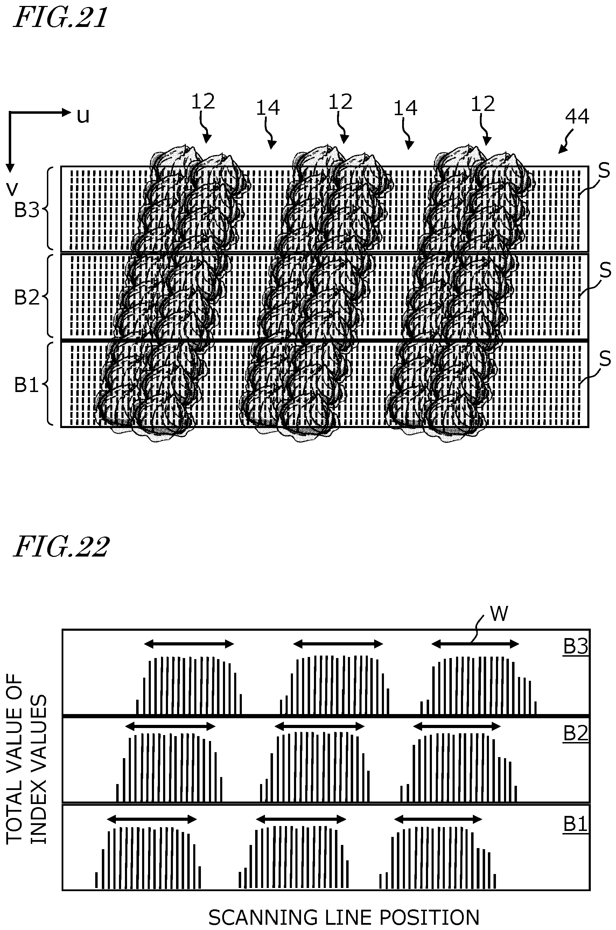

FIG. 21 is a diagram for describing a method which splits a whole or a part of the plan view image into a plurality of blocks, and determines the positions of edge lines for each of the plurality of blocks.

In this modified example, the processing device 122 splits a whole or a part of the plan view image 44 into a plurality of blocks. Then, for each of the plurality of blocks, the positions of edge lines E of crop rows 12 are determined. In the illustrated example, in the plan view image, there are three blocks B1, B2 and B3 in belt shapes that are continuous along the horizontal direction in the image. The processing device 122 is able to determine edge lines of crop rows based on a belt shape in a direction that is different from the traveling direction of the agricultural machine 100.

FIG. 22 is a diagram schematically showing a relationship (total value histogram) between positions of scanning lines S and total values of index values for each of blocks B1, B2 and B3 of the plan view image of FIG. 21. The scanning line S for which to perform totalization is always parallel to the vertical direction in the image. Totalization of index values is performed block by block, and there is no need to change the direction (angle) of the scanning lines S. By reducing the length of the scanning lines S, even if the crop rows 12 extend obliquely, it is possible to appropriately detect regions of the second pixels (background pixels) that are ascribable to the intermediate regions (work paths) 14. This eliminates the need to change the angles of the scanning lines S.

In FIG. 22, both ends of an arrow W indicate the positions of edge lines of a crop row, as determined for each of blocks B1, B2 and B3. In the example shown in FIG. 21, the directions of the crop rows 12 are inclined with respect to the direction of the scanning lines S. Therefore, in the earlier-described case where scanning line positions exhibiting a value that is 0.8 times a peak value of the total value histogram are adopted as the positions of edge lines E of a crop row 12, the positions of such edge lines E correspond to both ends of a "width" passing near the center of the crop row 12, in each of blocks B1, B2 and B3.

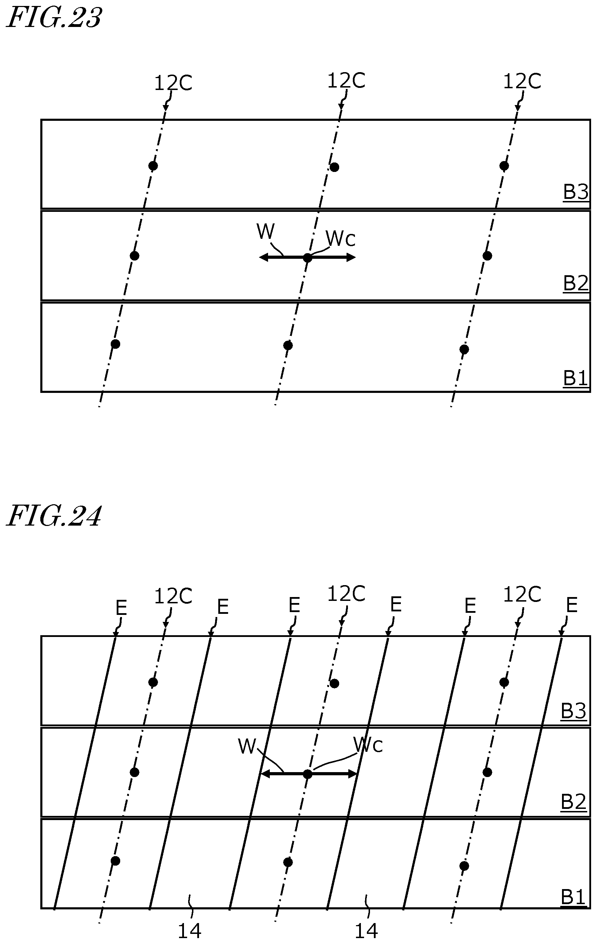

FIG. 23 shows crop row centers Wc in each of blocks B1, B2 and B3 in FIG. 22. A crop row center Wc is determined from the center of an arrow W that defines the edge lines of a crop row as determined from the total value histogram of FIG. 22, and is located at the center of each block along the vertical direction in the image. FIG. 23 shows examples of approximation line 12C for crop row centers Wc belonging to each identical crop row 12. An approximation line 12C is a straight line that is determined so that a mean square of its distances (errors) from the plurality of crop row centers Wc of each crop row 12 is minimum, for example. Such an approximation line 12C corresponds to a line passing through the center of the crop row 12.

FIG. 24 is a top view showing examples of edge lines E of crop rows 12 as determined from the approximation lines 12C in FIG. 23. In this example, two edge lines E that are associated with each crop row 12 have an interval that is equal to the length of an arrow W, and are at equidistant positions from an approximation line 12C.

According to this modified example, there is no need to change the directions (angles) of the scanning lines, and the edge lines E of the crop rows 12 can be determined with less computational load. Note that the length of each block along the vertical direction in the image may be set to an equivalent of a distance of 1 to 2 meters on the ground surface, for example. Although this modified example splits one image into three blocks to derive total value histograms, the number of blocks may be four or more. The block shape are not limited to the above examples. In the plan view image, the block may be in belt shapes that are continuous along either the horizontal direction in the image or the vertical direction in the image. The processing device **122** is able to determine the edge lines of the crop rows through splitting into blocks of belt shapes extending in a direction that is different from the traveling direction of the agricultural machine **100.**

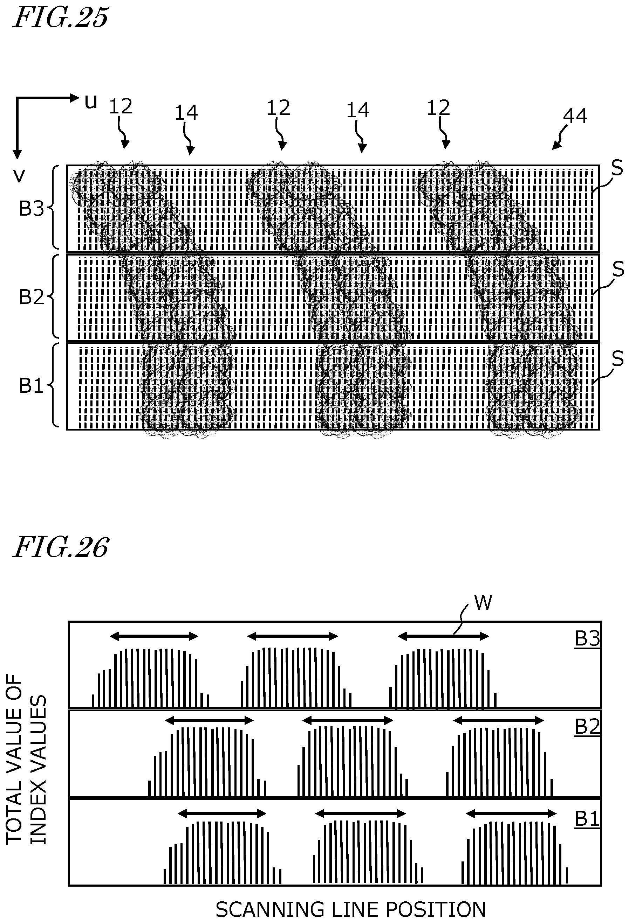

FIG. **25** schematically illustrates the crop rows **12** in the plan view image **44** including portions that are bent in curve shapes. FIG. **26** schematically shows a total value histogram for each of blocks **B1, B2** and **B3** of the plan view image **44** of FIG. **25.**

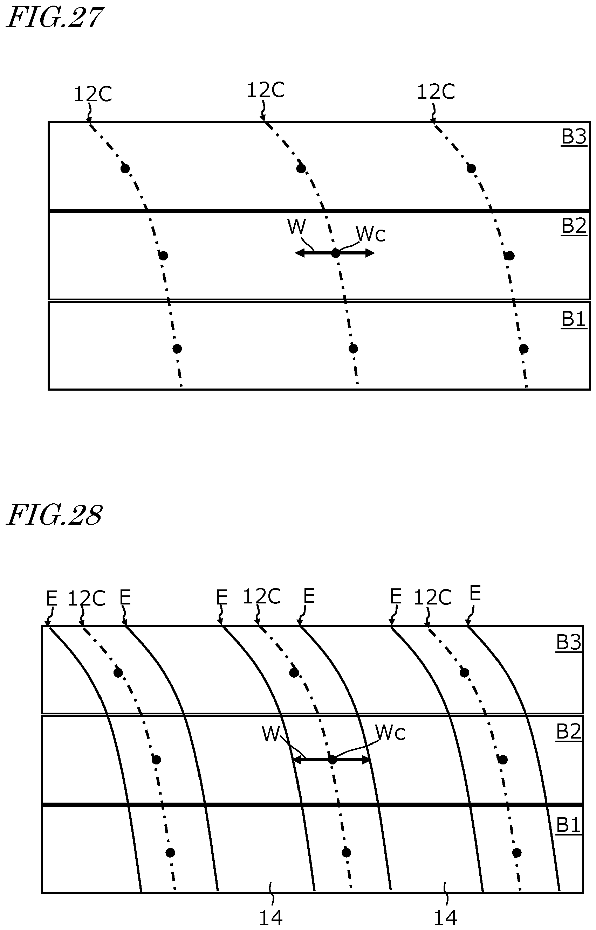

FIG. **27** is a diagram showing crop row centers **Wc** in each of blocks **B1, B2** and **B3** in FIG. **26,** and examples of approximation lines **12C** for the respective crop row centers **Xc.** An approximation line **12C** in this example is a curve (e.g., a higher-order curve such as a cubic curve) that is derived so that a mean square of its distances (errors) from the crop row centers **Wc** of each crop row **12** is minimum, for example. Such approximation lines **12C** correspond to curved lines which pass through the centers of the crop rows **12** having a curved portion.

FIG. **28** is a top view showing examples of edge lines **E** of crop rows **12** as determined from the approximation lines in FIG. **27.** The edge lines **E** are generated by a similar method to the method that has been described with reference to FIG. **24.** In other words, two edge lines **E** that are associated with each crop row **12** have an interval that is equal to the length of an arrow **W,** and are at equidistant positions from an approximation line **12C.**

As described above, by splitting the plan view image into a plurality of blocks and generating a total value histogram for each block, it becomes easy to determine the direction of a crop row, and even if the crop row changes its direction in the middle, it is possible to know the direction after the change.

The above-described methods of row detection can all be implemented by a computer, and carried out by causing the computer to execute desired operations.

(Embodiment 2)

A row detection system and a method of row detection according to an illustrative second embodiment of the present disclosure will be described. In the present embodiment, ridge detection is performed as a "row detection".

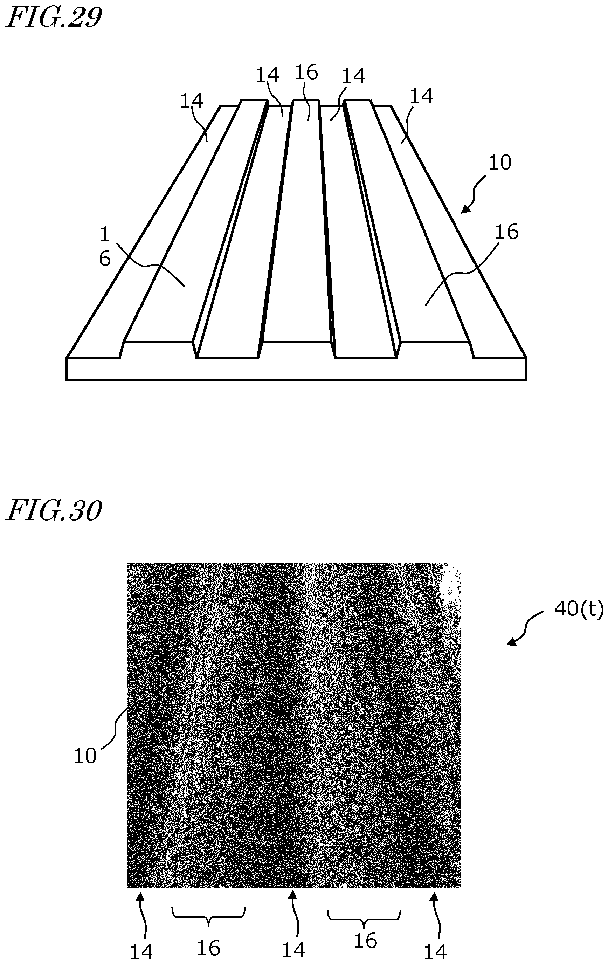

FIG. **29** is a perspective view schematically showing rows of ridges **16** made on the ground surface **10.** "Ridges" are places where plants for serial sowing or serial planting are to be planted, in which earth is raised high at intervals to result in bumps that extend essentially linearly. A cross-sectional shape of a ridge **16** taken perpendicularly to the direction in the ridge **16** extends may be, schematically, a trapezoid, a semicylindrical shape, or semicircular shape. In FIG. **29,** ridges **16** having a trapezoidal cross section are schematically shown. The actual ridges will not have such simple shapes as those shown in FIG. **29.** What exists between two adjacent ridges **16** is an intermediate region **14,** called interridge land. The intermediate regions **14** function as work paths. Crops may be planted in the ridges **16;** or, without planting having taken place, only the soil may be exposed on the ridges **16** as a whole. Each of the ridges **16** may be covered with a mulch.

The height, width, and intervals of the ridge **16** do not need to be uniform, but may vary from place to place. Generally speaking, the height of a ridge **16** is a difference of the ridge in height from the interridge land. In the present specification, the "height" of a ridge **16** is defined by the distance to an upper surface of the ridge **16** from the aforementioned reference plane **Re.**

In the example of FIG. **29,** the edge lines of the ridges **16** are clear. However, actual ridges **16** are portions of the ground surface **10** that are continuous from the intermediate regions **14,** and the "cross-sectional shapes" of the ridges **16** may be various as aforementioned; therefore, the boundaries between the ridges **16** and the intermediate regions **14** are not always clear. In embodiments of the present disclosure, the edge lines of a ridge **16,** i.e., the boundaries between a ridge **16** and intermediate regions **14,** are defined as positions that are located on opposite sides of a peak of the ridge **16,** the positions being at a height which accounts for a predetermined rate with respect to the peak. The positions of edge lines are positions having a height that is 0.8 times the peak of each ridge **16,** for example.

As shown in FIG. **7,** a row detection system **1000** according to the present embodiment also includes an imaging device **120** and a processing device **122** that performs image processing for time-series color images that have been acquired from the imaging device **120.** The hardware configuration of the processing device **122** is identical to the configuration of the processing device **122** according to the first embodiment.

In the present embodiment, the processing device **122** acquires time-series images from the imaging device **120,** and performs operations S21, S22 and S23 below.

(S21) from a plurality of images among time-series images that have been acquired at different points in time, determine a first amount of movement of each of a plurality of feature points in an image plane, through feature point matching.

(S22) through perspective projection of each of the plurality of feature points from the image plane onto a reference plane corresponding to the ground surface, determine a second amount of movement of each projection point in the reference plane based on the first amount of movement.

(S23) based on the second amount of movement, estimate heights of the plurality of feature points from the reference plane to detect a ridge on the ground surface.

Hereinafter, specific examples of operations S21, S22 and S23 will be described in detail.

First, operation S21 will be described. In operation S11, from a plurality of images among the time-series images that have been acquired at different points in time, a first amount of movement of each of the plurality of feature points in an image plane is determined through feature point matching. The time-series images are an aggregation of images that are chronologically acquired by the imaging device **120** through imaging. The time-series images do not need to be color images, but may be color images. In the case where the imaging device **120** outputs time-series color images, the processing device **122** may apply gray-scale processing to a given color image for processing among the time-series color images. As has been described with reference to the first embodiment, each image is composed of a frame-by-frame group of pixels. Similarly, the frame rate is as has been described with reference to the first embodiment.

FIG. **30** shows one frame of image **40(t)** among time-series images acquired by the imaging device (which in this example is a monocular camera) **122** mounted on the agricultural machine **100** at time t. In this example, crops are not planted on the ridges **16.** The data of the image **40(t)** captured by the monocular camera does not contain depth information. Therefore, it is impossible to know from the single image **40(t)** the difference in height between the ridges **16** and the intermediate regions **14.**

Not only at time t but also at other points in time, e.g., time t+1, t+2, t+3,..., the imaging device **120** chronologically acquires an image **40(t+1),** an image **40(t+2),** and image **40(t+3),**.... Each of the plurality of images that are chronologically acquired by the imaging device **120** during the travel of the agricultural machine **100** may contain the same region of the ground surface **10** in a partially overlapping manner.

In the present embodiment, the processing device **122** extracts feature points from the image **40(t),** the image **40(t+1),**.... A "feature point" is a point whose pixel(s) has a luminance value or color that is distinguishable from those of the surrounding pixels, such that the position(s) of the pixel(s) can be identified within the image. By extracting feature points in the image, a plurality of images that have captured the same scene can be associated with one another. In a region of the image where the luminance value and color are uniform, it is difficult to distinguish any pixel in that region from the surrounding pixels. Therefore, a feature point is to be selected from within a region in which the luminance value or color locally changes within the image. A feature point is a pixel or a group of pixels that has a "local feature".

In the present embodiment, the purpose of extracting a feature point is to measure an amount of movement of the feature point through feature point matching from time-series images **40(t)**, **40(t+1),**... that are acquired while the agricultural machine **100** is moving. Extraction of a feature point that is suitable for such feature point matching can be performed by the processing device **122** based on image processing. Examples of feature-point extraction algorithms based on image processing include SIFT (Scale-invariant feature transform), SURF (Speed-Upped Robust Feature), KAZE, and A-KAZE (ACCELERATED-KAZE). Similarly to SIFT or SURF, KAZE and A-KAZE are feature-point extraction algorithms that are robust because of their strength in scaling, rotation, and changes in lighting. Unlike SIFT and SURF, KAZE and A-KAZE do not employ a Gaussian filter. Therefore, KAZE and A-KAZE are unlikely to be affected by rotation, scales, and changes in luminance values, and are able to extract feature points even from a region of the image where changes in the luminance value and color are relatively small. This makes it easy to extract feature points that are suitable for feature point matching, even from an image of the soil surface or the like. As compared to KAZE, A-KAZE is advantageous due to its high robustness and ability to enhance the processing speed. In the present embodiment, the A-KAZE algorithm is used to extract feature points. However, the algorithm for feature point matching is not limited to this example.

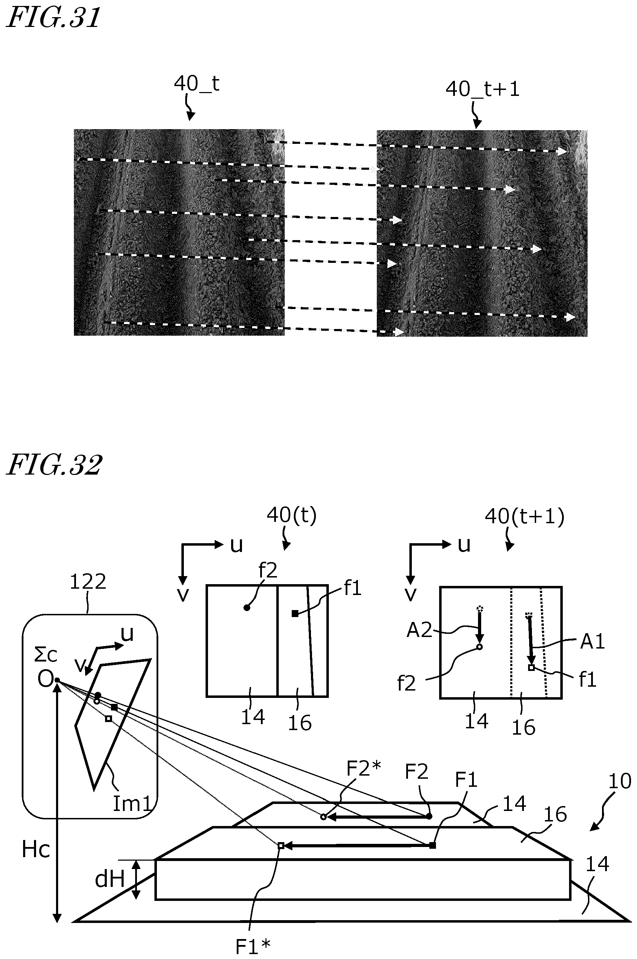

FIG. 31 schematically shows a correspondence of feature points between the image **40(t)** acquired from the imaging device at time t and the image **40(t+1)** acquired at time t+1. Herein, the time interval between time t and time t+1 may be e.g., not less than 100 milliseconds and not more than 500 seconds.

Finding the association between a plurality of feature points extracted from the image **40(t)** and a plurality of feature points in the image **40(t+1)** corresponding to the aforementioned plurality of feature points is carried out by the algorithm of feature point matching. In FIG. **31,** 8 pairs of corresponding feature points are connected by arrows. In the present embodiment, by A-KAZE, the processing device **122** is able to extract e.g. hundreds to over one thousand feature points from each of the image **40(t)** and the image **40(t+1)** . The number of feature points to be extracted may be determined based on the number of images to be processed in one second.

After performing such feature point matching, for each of the plurality of feature points, the processing device **122** determines an amount of movement (first amount of movement) in the image plane. It is not that the first amount of movement determined from the two images **40(t)** and **40(t+1)** has one common value for all feature points. Depending on the physical difference in height between feature points existing on the ground surface **10,** the first amount of movement exhibits different values.

FIG. **32** is a perspective view schematically showing the movement of a ridge **16** and an intermediate region (work path) **14** appearing in images acquired by the imaging device **120**, where the image **40(t)** and the image **40(t+1)** are also schematically shown. FIG. **32** schematically shows how a point **F1** on the ridge **16** and a point **F2** on the intermediate region (interridge land or work path) **14** may horizontally move toward the left side of the figure. This horizontal movement is a relative motion that occurs as the imaging device **120** fixed to the agricultural machine **100** moves toward the right side together with the agricultural machine **100**. In FIG. **32,** for simplicity, an origin **O** of the camera coordinate system Σ**c** of the imaging device **120** is kept stationary, while the ground surface **10** moves toward the left side. The origin **O** of the camera coordinate system Σ**c** has a height **He.** In the illustrated example, the ridge **16** is a simplified ridge shape having a height **dH.**

In the image **40(t)** of FIG. **32,** the feature point **f1** of the ridge **16** and the feature point **f2** of the intermediate region **14** are shown. These feature points **f1** and **f2** are examples of a multitude of feature points which are extracted by a feature-point extraction algorithm such as A-KAZE. In the image **40(t+1),** the feature points **f1** and **f2** after the movement are shown. Also in the image **40(t+1),** for referencing sake, arrow **A1** indicating the movement of the feature point **f1** and arrow **A2** indicating the movement of the feature point **f2**, during the period of time from time t to t+1, are shown. The length of arrow **A1** (corresponding to the first amount of movement) is greater than the length of arrow **A2** (corresponding to the first amount of movement). Thus, the amount of movement of a feature point in the image (first amount of movement) differs depending on the distance of the corresponding point of the subject from the origin **O** of the camera coordinate system Σ**c.** This id due to the geometric nature of perspective projection.

The feature points **f1** and **f2** in the image **40(t)** are, respectively, points resulting through a perspective projection of the points **F1** and **F2** on the ground surface **10,** as the subjects, onto the image plane **Im1** of the imaging device **120.** Similarly, the feature points **f1** and **f2** in the image **40(t+1)** are, respectively, points resulting through a perspective projection of the points **F1\*** and **F2\*** on the ground surface **10,** as the subjects, onto the image plane **Im1** of the imaging device **120.** The center point of perspective projection is the origin **O** of the camera coordinate system Σ**c** of the imaging device **120.** Since perspective projection has a bidirectional relationship, the points **F1** and **F2** can be said to be points resulting through a perspective projection of the feature points **f1** and **f2** in the image **40(t)** onto the ground surface **10.** Similarly, the points **F1\*** and **F2\*** can be said to be points resulting through a perspective projection of the feature points **f1** and **f2** in the image **40(t)** onto the ground surface **10.**

As shown in FIG. **32,** from time t to time t+1, the point **F1** on the ridge **16** moves to the position of the point **F1\*,** and the point **F2** on the intermediate region **14** moves to the position of the point **F2\*.** The distances of these movements are each equal to the distance (distance of horizontal movement) that was traveled by the agricultural machine **100** from time t to time t+1. On the other hand, the amounts of movement of the feature points **f1** and **f2** on the image plane **Im1** of the imaging device **120** are different from each other.

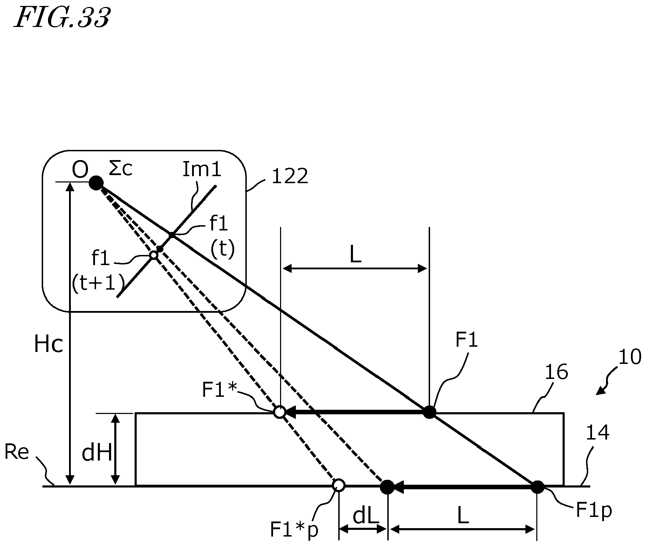

FIG. **33** is a diagram schematically showing a relationship between: the amount of movement **(L)** of the point **F1** on the ridge **16,** corresponding to the feature point **f1** on the image plane **Im1** of the imaging device **120;** and the amount of movement (second amount of movement **L+dL)** of a point (projection point) **F1p** projected onto the reference plane **Re.** In this example, the height of the reference plane **Re** is matched to the height of the intermediate region (interridge land) **14,** while the ridge **16** has the height **dH.**

As can be seen from FIG. **33,** the point **F1** on the ridge **16** has moved toward left by a distance (amount of movement) **L** that is equal to the traveled distance of the agricultural machine **100;** however, the amount of movement (second amount of movement) of the point (projection point) **F1p** resulting through perspective projection onto the reference plane **Re** is expressed as **L+dL,** which is longer than **L.** This is because the point **F1** on the ridge **16** is at a higher position than the reference plane **Re,** and is closer to the center (origin **O** of the camera coordinate system) of the perspective projection. Corresponding to this excess length **dL,** the amount of movement (first amount of movement) on the image plane **Im1** is increased.

From the ratio (homothetic ratio) between lengths of the sides of two homothetic triangles shown in FIG. 33, the following formula is derived.

[eq. 6]

$$\frac{Hc}{L+dL} = \frac{(Hc-dH)}{L}$$

The above formula is transformed to give the following formula.

[eq. 7]

$$dH = Hc\left(1.0 - \frac{L}{L + dL}\right)$$

In order to estimate the size of a bump-dent difference on the ground surface 10 based on the above formula, the processing device **122** according to the present embodiment performs operation S22. That is, each of the plurality of feature points is perspective-projected from the image plane onto the reference plane **Re** corresponding to the ground surface **10,** and the second amount of movement (L+dL) of each projection point in the reference plane **Re** is determined based on the first amount of movement. The distance **L** in the above formula can be acquired by measuring the traveled distance of the agricultural machine **100.** Moreover, the height **He** of the origin **O** of the camera coordinate system from the reference plane **Re** is known. Therefore, once the second amount of movement (L+dL) becomes known, the height **dH** of the ridge **16** can be calculated from the formula of eq. 7. The second amount of movement (L+dL) itself can be determined from the first amount of movement.

After performing operation S22, the processing device **122** performs operation S23.

In operation S23, based on the second amount of movement (L+dL) of each feature point, the processing device **122** estimates the height **dH** of each feature point from the reference plane **Re,** and detects the ridge **16** on the ground surface **10.**

Thus, in the present embodiment, given a height **He** of the center point **O** of perspective projection from the reference plane **Re,** heights **dH** of the plurality of feature points from the reference plane **Re,** a second amount of movement **L** of a feature point (whose **dH** is zero) on the reference plane **Re,** and a second amount of movement L+dL of a feature point whose dH is greater than zero, the height of each feature point can be determined as Hc·(1.0-L/(L+dL)).

When determining the second amount of movement from the first amount of movement, homography transformation can be utilized. Specifically, by using the aforementioned inverse H1$^{-1}$ of the transformation matrix H1, the coordinates of each feature point on the image plane **Im1** may be converted into coordinates of a corresponding point on the reference plane **Re.** Therefore, first, the processing device **122** determines a first amount of movement from the coordinates of each feature point on the image plane **Im1** before and after the movement. Next, after the coordinates of each feature point are changed through homography transformation into coordinates of a corresponding point on the reference plane **Re,** a second amount of movement can be determined from the coordinates before and after the movement on the reference plane **Re.**

[eq. 8]

$$\begin{pmatrix} X \\ Y \\ 1 \end{pmatrix} = H1^{-1} \begin{pmatrix} u \\ v \\ 1 \end{pmatrix}$$

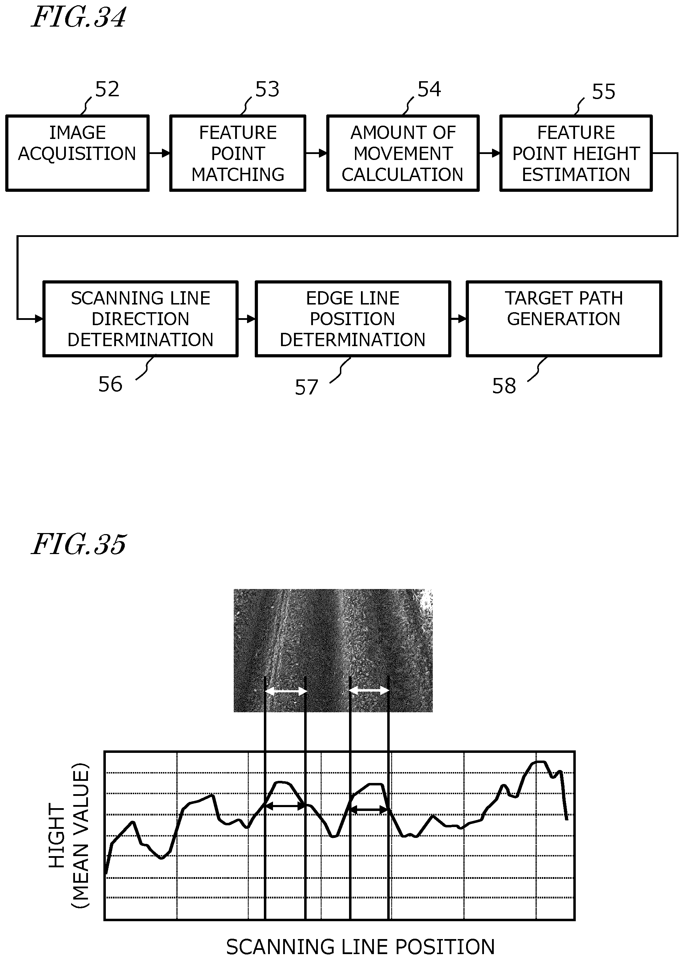

FIG. **34** is a block diagram showing a series of processes that are executed by the processing device **122** according to the second embodiment. As shown in FIG. **34,** the processing device **122** executes an image acquisition **52,** a feature point matching **53,** an amount of movement calculation **54,** and a feature point height estimation **55.** As a result, for each of a multitude of feature points in the image, an estimated value of height from the reference plane **Re** can be obtained. A two-dimensional map of such estimated values of height represents a distribution of differences in height of bumps and dents existing on the ground surface **10.**

As has been described with respect to the first embodiment, a plurality of scanning lines are also set in the present embodiment. In the present embodiment, however, a mean value of heights of feature points is calculated along each scanning line. Moreover, by varying the direction (angle) of the scanning lines, the direction in which a ridge extends can be found from the distribution of height mean values of feature points. Once the direction in which the ridge **16** extends is determined, edge lines of the ridge **16** can be determined by a method similar to the method of determining the edge lines of a crop row **12.** As has been described with reference to FIG. **21** and the like, adopting a method of splitting the image into a plurality of blocks makes it possible to omit a scanning line direction determination **56.**

Thus, as shown in FIG. **34,** the processing device **122** according to the present embodiment executes the scanning line direction determination **56,** an edge line position determination **57,** and a target path generation **58.**

FIG. **35** is a diagram showing a relationship between a mean value of heights of feature points on a scanning line that is parallel to the direction in which ridges extend and the position of the scanning line. In the graph of FIG. **35,** the horizontal axis represents the positions of scanning lines, whereas the vertical axis represents the height mean value of feature points on each scanning line. As shown by the graph, the height mean value repetitively increases and decreases as the position of the scanning line moves from left to right. Any position at which the height mean value exhibits a peak corresponds to the center of a ridge. Note that the curve indicating the height mean values forms a trough between two adjacent peaks. This trough corresponds to the neighborhood of the center of an intermediate region (interridge land or work path) **14.**

In the present embodiment, the processing device **122** determines, as edge lines of the ridge, positions that are located on opposite sides of the position of a peak as indicated by the height mean values, the positions having a height which accounts for a predetermined rate (e.g., 0.8 times) with respect to the peak. Above the graph of FIG. **35,** blank arrows indicating the positions of the edge lines are shown for each of two ridges in the image.

In the present embodiment, too, as has been described with reference to FIG. **21** to FIG. **28,** an image may be split into a plurality of blocks, and mean values of heights of feature points on scanning lines may be determined for each block.

According to the present embodiment, row detection does not depend on the "color of the crop row", thus providing an advantage of not being susceptible to the kind of crop or the daylighting conditions. It has been confirmed that detection is possible not only for tall ridges, e.g., "high ridges" that are often made in growing vegetables, but also for relatively low ridges whose height is in the range of 5 to 10 centimeters.

The detection of crop rows in the first embodiment and the detection of ridges in the second embodiment may be simultaneously or selectively performed by the processing device **122.** In the case where crops are planted on the ridges, the processing device **122** may function as the crop row detection system according to the first embodiment and as the ridge detection system according to the second embodiment. In that case, edge lines of crop rows and edge lines of ridges are determined. The target path for the agricultural machine may be determined based on both kinds of or one kind of edge lines.

The processing device **122** may calculate a detection reliability for each of crop row detection and ridge detection. The reliability of crop row detection may be determined based on the distribution of total values of index values shown in FIG. **22,** the magnitude of the peak values, etc., for example. The reliability of ridge detection may be determined based on the magnitude of the difference between a local maximum and a local minimum in the height distribution shown in FIG. **35,** etc., for example. For instance, in the case where a target path has been generated based on the edge lines of a detected crop row and the agricultural machine is traveling along that target path, ridge detection may be performed in the background so that a target path based on the edge lines of a ridge will be generated at any place where crop row detection is impossible or its reliability has decreased to below a predetermined level.

In the case where the processing device **122** is capable of performing both crop row detection and ridge detection, one of crop row detection and ridge detection, or both, may be performed in accordance with the user's selection.

(Embodiment 3)

Hereinafter, a third embodiment of a row detection system according to the present disclosure will be described.

In each of the above embodiments, rows can be detected from the entire image. In the present embodiment, the target region of row detection, i.e., the search range for rows, is limited to a portion of the image.

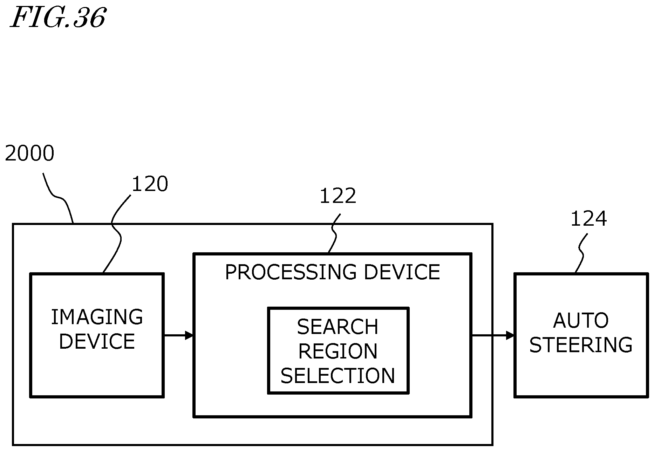

A row detection system **2000** according to the present embodiment includes a processing device **122** that is mounted to the agricultural machine **100.** The agricultural machine **100** according to the present embodiment includes one or more wheels. FIG. **36** shows an example of a basic configuration of the row detection system **2000** according to the present embodiment. The row detection system **2000** includes a processing device **122** having a similar hardware configuration to those of the other embodiments. From time-series images, the processing device **122** selects a search region in which to detect at least one of crop rows and ridges. This search region has a size and shape containing at least a portion of the wheel(s)

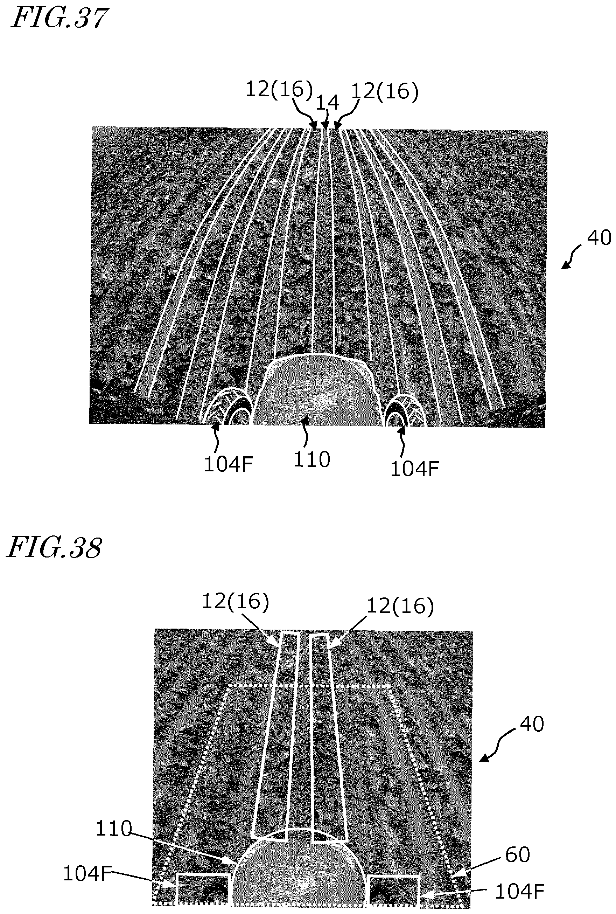

FIG. **37** shows an example of the image **40** acquired by the processing device **122** from the imaging device **120.** The image **40** is one of the time-series images. The following appears in this image **40:** crop rows **12,** intermediate regions **14,** a portion of the vehicle body **110** of the agricultural machine **100,** and portions of the front wheels **104F.** In FIG. **37,** for referencing sake, edge lines are indicated by blank lines.

FIG. **38** is a diagram showing a portion of the image of FIG. **37.** In FIG. **38,** the portion of the vehicle body **110** of the agricultural machine **100** and the portions of the front wheels **104F** appearing in the image **40** are surrounded by blank lines. In the image **40** of FIG. **38,** an example of a search region **60** is indicated by a trapezoid of broken lines containing the portions of the front wheels **104F.** The search region **60** has a shape that contains, among at least one of the crop rows and the ridges existing in the image **40,** a crop row or ridge that is located on a left side of the front wheels **104F** over to a crop row or ridge that is located on a right side of the front wheels **104F.**

As can be seen from the image exemplified in FIG. **12,** peripheral portions suffer from more distortion than does the central portion in a plan view image. Therefore, as shown in FIG. **19,** for example, the peak value becomes lower and the interval between peaks becomes broader as the scanning line position becomes more distant from the central portion.

On the other hand, the crop rows or ridges to be detected, which are needed for selecting a target path, are around the front of the traveling agricultural machine. More specifically, it suffices to accurately detect crop rows or ridges that are located near the wheels included in the traveling equipment of the agricultural machine. In the present embodiment, row detection is performed not with respect to the entire image that is acquired by the imaging device **120,** but only in a partial region, whereby the amount of computation to be performed by the processing device **122** and the time required for computation can be reduced. Because outliers caused by distortion at the image periphery can be eliminated, the accuracy of row detection is enhanced.

The selection of the search region **60** (region setting) depends on the position and orientation in which the imaging device **120** is mounted to the agricultural machine **100,** and also on the structure or shape of the agricultural machine **100.** For example, after the imaging device **120** is mounted to the agricultural machine **100,** the range (shape, size, position) of the search region **60** may be manually determined while confirming the image obtained from the imaging device **120** on a monitor screen. Based on the optical performance and mounted position of the imaging device **120,** the particular model of the agricultural machine, etc., the range of the search region **60** may be finalized and input to the processing device **122.**

The processing device **122** according to the present embodiment may be configured to detect at least a portion of the wheels **10F** from the image **40** as shown in FIG. **38** by using an image recognition technique, for example. In that case, it may also be possible to adaptively change the range of the search region **60** so as to select a region containing at least the detected portions of the front wheels **104F** as the search region **60.**

The processing device **122** may estimate a positional relationship between the at least detected one of crop rows **12** and ridges **16** and the front wheels **104F** based on an image of the portions of the front wheels **104F** that are contained in the search region **60.** The processing device **122** may be configured to estimate a positional relationship between the at least detected one of crop rows **12** and ridges **16** and the agricultural machine **100** based on such a positional relationship.

Note that the processing device **122** may not possess any information indicating accurate positions of the front wheels **104F** relative to the agricultural machine **100.** Such information indicating positions may be coordinates of the front wheels **104F** relative to the body coordinate system Σ**b** fixed to the agricultural machine **100,** for example. Even when such coordinates are previously stored in the storage device **28** of the processing device **122,** its accuracy may be compromised if the user changes the tire size of the front wheels **104F** or changes the interval between the right and left front wheels **104F,** for example. In such cases, the processing device **122** may detect portions of the front wheels **104F** that are contained in the search region **60,** and based on an image of the detected portions of the front wheels **104F,** estimate the positions of the front wheels **104F** relative to the agricultural machine **100.**

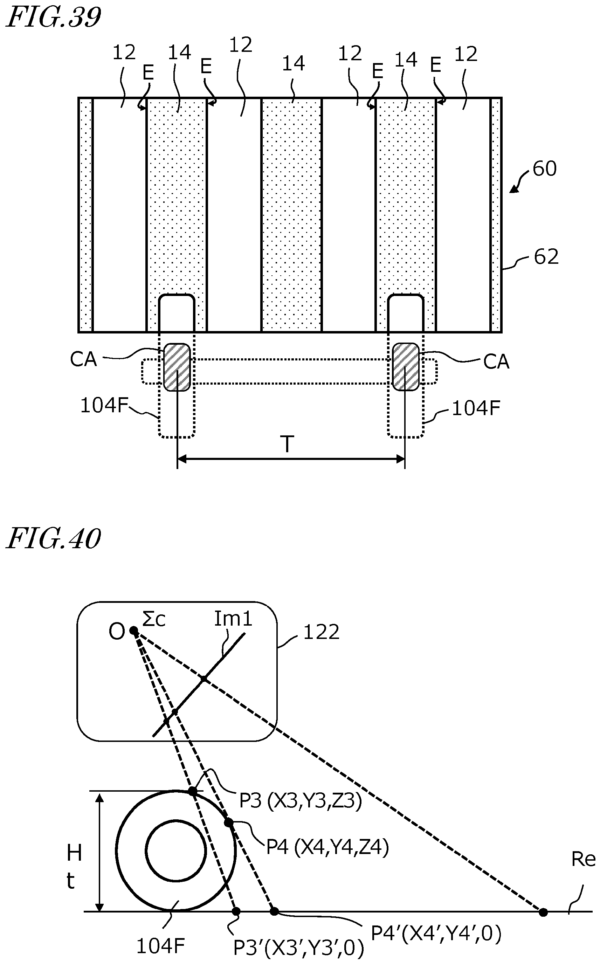

FIG. **39** is a top view schematically showing a portion of the ground surface **10** in which crop rows **12** are made. A pair of front wheels **104F** are shown in FIG. **39.** The rectangular area **62** in such a top view is a plan view image that is generated by applying the aforementioned homography transformation to the search region **60** of the image of FIG. **38.** In FIG. **39,** the vehicle body **110** appearing in the search region **60** of FIG. **38** is omitted from illustration. Also, because images of the portions of the front wheels **104F** appearing in the search region **60** will be considerably deformed through homography transformation, FIG. **39** illustrates the front wheels **104F** with the shapes of figures that have just undergone "parallel projection" onto the reference plane **Re.** Furthermore, for referencing sake, FIG. **39** schematically shows tire treads (ground plane) **CA** at which the front wheels **104F** come in contact with the ground surface **10.** The distance **T** between centers of the right and left tire treads **CA** is the "tread width (track)".

In general, relative to the vehicle body **110** of the agricultural machine **100,** positions of the tire treads **CA** are known. Therefore, the positional relationship of the tire treads **CA** with the plan view image (rectangular area) **62** of the search region **60** is also known. However, setting the search region **60** so as to contain at least a portion of one or more wheels as in the present embodiment can provide the following effects.

· The structure of the vehicle body **110** may differ from model to model, and also the tread width (distance between centers of tire treads **CA**) **T** may differ from model to model. Even within the same model, the user may change the tread width **T** as aforementioned. Therefore, selecting the shape and size of the search region **60** so as to contain the wheels **104** appearing in the image will realize an image processing that can cope with various models, and cope with changes in the tread width **T** that may be made by the user.

· It is no longer required to input the positions of the tire treads **CA** as coordinates in the body coordinate system Σ**b** in advance. It becomes possible to automatically acquire coordinates of the front wheels **104F** or the tire treads **CA** in the body coordinate system Σ**b** based on an image that is acquired by the imaging device **120.**

· On the basis of an image, it becomes possible to monitor a positional error between: the edge lines of a row determined by the row detection system or a target path that is generated based on the edge lines; and the wheels.

Note that, as mentioned earlier, the wheels will be deformed when a plan view image of the ground surface is generated through homography transformation. In order to accurately estimate a positional relationship of the wheels (in particular tire treads **CA)** with the edge lines of a row or a target path, it is desirable to correct the homography transformation. Hereinafter, this aspect will be described.

FIG. **40** is a diagram schematically showing a positional relationship between: points **P3** and **P4** which are contained in portions of the front wheels **104F** appearing in the image **40;** and corresponding points **P3'** and **P4'** resulting through perspective projection of these points **P3** and **P4** onto the reference plane **Re.** It is assumed that the points **P3** and **P4** have coordinates (X3,Y3,Z3) and (X4,Y4,Z4), respectively, in the world coordinate system. It is also assumed that the corresponding points **P3'** and **P4'** have coordinates (X3',Y3',0) and (X4',Y4',0), respectively, in the world coordinate system. As can be seen from FIG. **40,** the points **P3** and **P4** are at higher positions than the reference plane **Re.** Therefore, if a plan view image as viewed directly from above the reference plane **Re** is generated through homography transformation, the X coordinates and Y coordinates of the corresponding points **P3'** and **P4'** on the reference plane **Re** will respectively be shifted from the X coordinates and Y coordinates of the points **P3** and **P4.** Therefore, if a plan view image is generated by applying homography transformation to the image **40** having portions of the front wheels **104F** appearing therein, images of the front wheels **104F** will appear in distorted shapes in the plan view image, thus making it difficult to estimate an accurate positional relationship.

In order to know the positional relationship between the front wheels **104F** and the edge lines of a crop row **12** or a ridge **16** based on such a plan view image, it is preferable to estimate the centers of the tire treads **CA** based on the coordinates (X3',Y3',0) and (X4',Y4',0) of the corresponding points **P3'** and **P4'.**

In the example of FIG. **40,** if the height **Ht** of the front wheels **104F** is known, then the positions, as taken on the front wheels **104F,** of the points **P3** and **P4** on the front wheels **104F** as appearing in the image can be estimated from their shapes in the image, for example, by a technique such as pattern matching. Once the positions of the points **P3** and **P4** on the front wheels **104F** are estimated, it is possible to estimate the center positions of the tire treads **CA** by correcting the coordinates (X3',Y3',0) and (X4',Y4',0) of the corresponding points **P3'** and **P4',** for example.

Thus, in the present embodiment, by including at least a portion of the wheel (s) in the search region, it becomes possible to monitor the relative locations of the wheels relative to a row that has been detected from within the search region, on the basis of time-series images.

(Embodiment 4)

Next, an agricultural machine having a row detection system according to embodiment of the present disclosure will be described.

An agricultural machine according to the present embodiment includes the above-described row detection system. Moreover, this agricultural machine includes a control system for performing control to achieve auto-steer driving. The control system is a computer system that includes a storage device and a controller, and is configured to control steering, travel, and other operations of the agricultural machine.

In a usual automatic steering operation mode, the controller identifies the position of the agricultural machine by using the positioning device, and based on a target path which has been generated in advance, controls the steering of the agricultural machine so that the agricultural machine travels along the target path. Specifically, it controls the steering angle of the wheels responsible for steering (e.g., the front wheels) of the agricultural machine so that the work vehicle travels along the target path within the field. The agricultural machine according to the present embodiment includes an automatic steering device which performs not only such a usual automatic steering mode, but also self-driving under "row-following control" within any field in which rows of crops or ridges are made.

The positioning device includes a GNSS receiver, for example. Such a positioning device is able to identify the position of the work vehicle based on signals from GNSS satellites. However, when there are rows in the field, even if the positioning device is able to measure the position of the agricultural machine with a high accuracy, the interspaces between rows are narrow, such that the traveling equipment, e.g., wheels, of the agricultural machine may be liable to protrude into the rows depending on how the crops are planted or depending on the state of growth. In the present embodiment, however, the aforementioned row detection system can be used to detect actually-existing rows and perform appropriate automatic steering. In other words, the automatic steering device included in the agricultural machine embodiment of the present disclosure is configured to control the steering angle of the wheels responsible for steering based on the positions of the edge lines of a row that are determined by the row detection system.

Moreover, in the agricultural machine according to the present embodiment, the processing device of the row detection system can monitor the positional relationship between the edge lines of rows and the wheels responsible for steering on the basis of time-series color images. By generating a positional error signal from this positional relationship, it becomes possible for the automatic steering device of the agricultural machine to appropriately adjust the steering angle so as to reduce the positional error signal.

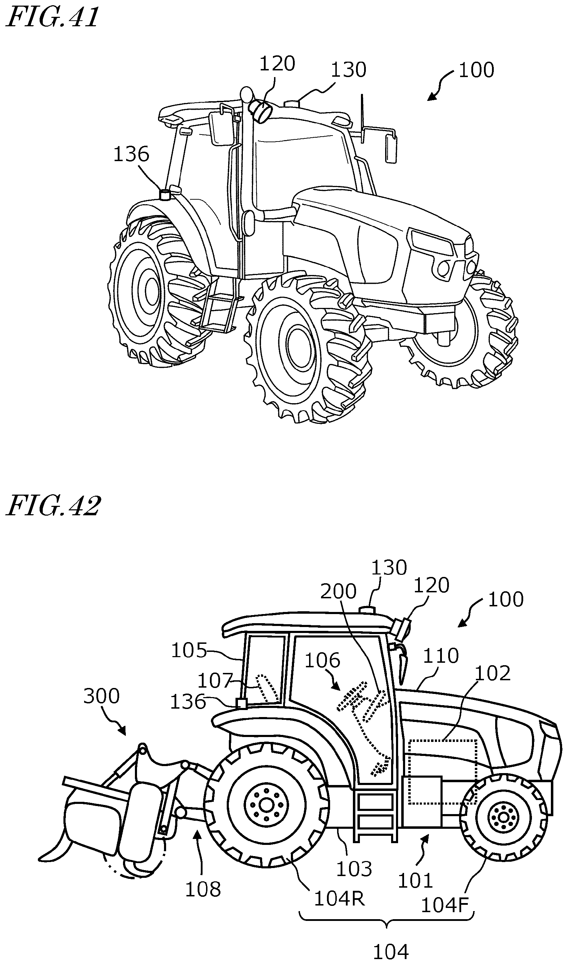

FIG. **41** is a perspective view showing an example appearance of the agricultural machine **100** according to the present embodiment. FIG. **42** is a side view schematically showing an example of the agricultural machine **100** to which an implement **300** is attached. The agricultural machine **100** according to the present embodiment is an agricultural tractor (work vehicle) having the implement **300** attached thereto. The agricultural machine **100** is not limited to a tractor, and does not need to have the implement **300** attached thereto. The row detection technique according to the present disclosure can exhibit excellent effects when used in small-sized crop management machines and vegetable transplanters that may be used for operations associated with the interridge land, such as ridge making, intertillage, ridging, weeding, side dressing, and preventive pest control, for example.

The agricultural machine **100** according to the present preferred embodiment includes an imaging device **120** and an obstacle sensor(s) **136**. Although one obstacle sensor **136** is illustrated in FIG. **41,** obstacle sensors 136 may be provided at a plurality of positions of the agricultural machine **100**.

As shown in FIG. **42,** the agricultural machine **100** includes a vehicle body **110,** a prime mover (engine) **102,** and a transmission **103**. On the vehicle body **110,** tires (wheels) **104** and a cabin **105** are provided. The tires **104** include a pair of front wheels **104F** and a pair of rear wheels **104R**. Inside the cabin **105,** a driver's seat **107,** a steering device **106,** an operational terminal **200,** and switches for manipulation are provided. Either the front wheels **104F** or the rear wheels **104R** may be crawlers, rather than tires. The agricultural machine **100** is a four-wheel drive vehicle including four wheels **104** as driving wheels, or a two-wheel drive vehicle including a pair of front wheels **104F** or a pair of rear wheels **104R** as driving wheels.

The positioning device **130** in the present embodiment includes a GNSS receiver. The GNSS receiver includes an antenna to receive a signal(s) from a GNSS satellite(s) and a processing circuit to determine the position of the agricultural machine **100** based on the signal (s) received by the antenna. The positioning device **130** receive a GNSS signal(s) transmitted from a GNSS satellite(s), and performs positioning on the basis of the GNSS signal (s). GNSS is a general term for satellite positioning systems, such as GPS (Global Positioning System), QZSS (Quasi-Zenith Satellite System, e.g., MICHIBIKI), GLONASS, Galileo, BeiDou, and the like. Although the positioning device **130** in the present embodiment is disposed above the cabin **105,** it may be disposed at any other position.

Furthermore, the positioning device **130** may complement the position data by using a signal from an inertial measurement unit (IMU). The IMU can measure tilts and minute motions of the agricultural machine **100.** By complementing the position data based on the GNSS signal using the data acquired by the IMU, the positioning performance can be improved.

In the examples shown in FIGS. **41** and **42,** the obstacle sensor(s) **136** is provided at the rear of the vehicle body **110.** The obstacle sensor(s) **136** may be disposed at any other position than the rear of the vehicle body **110.** For example, one or more obstacle sensors **136** may be disposed at any position selected from among the sides of the vehicle body **110,** the front of the vehicle body **110,** and the cabin **105.** The obstacle sensor(s) **136** detects objects around the agricultural machine **100.** Each obstacle sensor **136** may include a laser scanner or an ultrasonic sonar, for example. When an object exists at a position closer to the obstacle sensor **136** than a predetermined distance, the obstacle sensor **136** outputs a signal indicating the presence of an obstacle. A plurality of obstacle sensors **136** may be provided at different positions of the body of the agricultural machine **100.** For example, a plurality of laser scanners and a plurality of ultrasonic sonars may be disposed at different positions of the body. Providing a multitude of obstacle sensors **136** can reduce blind spots in monitoring obstacles around the agricultural machine **100.**

The prime mover **102** may be a diesel engine, for example. Instead of a diesel engine, an electric motor may be used. The transmission **103** can change the propulsion and moving speed of the agricultural machine **100** through a speed changing mechanism. The transmission **103** can also switch between forward travel and backward travel of the agricultural machine **100.**

The steering device **106** includes a steering wheel, a steering shaft connected to the steering wheel, and a power steering device to assist in the steering by the steering wheel. The front wheels **104F** are the wheels responsible for steering, such that changing their angle of turn (also referred to as "steering angle") can cause a change in the traveling direction of the agricultural machine **100.** The steering angle of the front wheels **104F** can be changed by manipulating the steering wheel. The power steering device includes a hydraulic device or an electric motor to supply an assisting force for changing the steering angle of the front wheels **104F.** When automatic steering is performed, under the control of a controller disposed in the agricultural machine **100,** the steering angle may be automatically adjusted by the power of the hydraulic device or electric motor.

A linkage device **108** is provided at the rear of the vehicle body **110.** The linkage device **108** may include, e.g., a three-point linkage (also referred to as a "three-point link" or a "three-point hitch"), a PTO (Power Take Off) shaft, a universal joint, and a communication cable. The linkage device **108** allows the implement **300** to be attached to or detached from the agricultural machine **100.** The linkage device **108** is able to raise or lower the three-point linkage device with a hydraulic device, for example, thus controlling the position or pose of the implement **300.** Moreover, motive power can be sent from the agricultural machine **100** to the implement **300** via the universal joint. While towing the implement **300,** the agricultural machine **100** allows the implement **300** to perform a predetermined task. The linkage device may be provided frontward of the vehicle body **110.** In that case, the implement may be connected frontward of the agricultural machine **100.**

The implement **300** shown in FIG. **42** is a rotary cultivator, for example. The implement **300** to be towed by or attached to a tractor or other work vehicles when traveling in a manner of following rows may be any kind, so long as it is used in operations associated with the interridge land, such as ridge making, intertillage, ridging, weeding, side dressing, and preventive pest control.

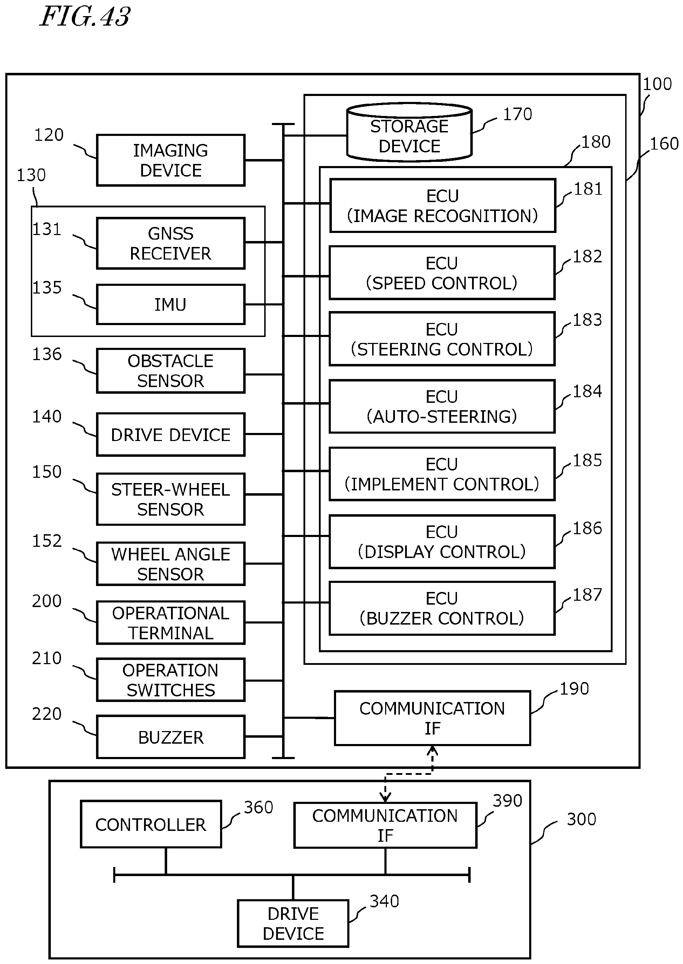

FIG. **43** is a block diagram showing an example of a schematic configuration of the agricultural machine **100** and the implement **300.** The agricultural machine **100** and the implement **300** can communicate with each other via a communication cable that is included in the linkage device **108.**

In addition to the imaging device **120,** the positioning device **130,** the obstacle sensor **136,** and the operational terminal **200,** the agricultural machine **100** in the example of FIG. **43** includes a drive device **140,** a steering wheel sensor **150,** an angle-of-turn sensor (wheel angle sensor) **152,** a control system **160,** a communication interface (IF) **190,** operation switches **210,** and a buzzer **220.** The positioning device **130** includes a GNSS receiver **131,** an RTK receiver **122,** and an inertial measurement unit (IMU) **125.** The control system **160** includes a storage device **170** and a controller **180.** The controller **180** includes a plurality of electronic control units (ECU) **181** to **186.** The implement **300** includes a drive device **340,** a controller **380,** and a communication interface (IF) **390.** Note that FIG. **43** shows component elements which are relatively closely related to the operation of automatic steering or self-driving by the agricultural machine **100,** while other component elements are omitted from illustration.

The positioning device **130** performs positioning of the agricultural machine **100** by utilizing GNSS. In the case where the positioning device **130** includes a RTK receiver, not only GNSS signals transmitted from multiple GNSS satellites, but also a correction signal that is transmitted from a reference station is used. The reference station may be disposed around the field that is traveled by the agricultural machine **100** (e.g., at a position within 10 km of the agricultural machine **100).** The reference station generates a correction signal based on the GNSS signals received from the multiple GNSS satellites, and transmits the correction signal to the positioning device **130.** The GNSS receiver **131** in the positioning device **130** receives the GNSS signals transmitted from the multiple GNSS satellites. Based on the GNSS signals and the correction signal, the positioning device **130** calculates the position of the agricultural machine **100,** thus achieving positioning. Use of an RTK-GNSS enables positioning with an accuracy on the order of several cm of errors, for example. Positional information (including latitude, longitude, and altitude information) is acquired through the highly accurate positioning by an RTK-GNSS. Note that the positioning method is not limited to an RTK-GNSS; any arbitrary positioning method (e.g., an interferometric positioning method or a relative positioning method) that provides positional information with the necessary accuracy can be used. For example, positioning may be performed by utilizing a VRS (Virtual Reference Station) or a DGPS (Differential Global Positioning System).

The IMU **135** includes a 3-axis accelerometer and a 3-axis gyroscope. The IMU **135** may include a direction sensor such as a 3-axis geomagnetic sensor. The IMU **135** functions as a motion sensor which can output signals representing parameters such as acceleration, velocity, displacement, and pose of the agricultural machine **100.** Based not only on the GNSS signals and the correction signal but also on a signal that is output from the IMU **135,** the positioning device **130** can estimate the position and orientation of the agricultural machine **100** with a higher accuracy. The signal that is output from the IMU **135** may be used for the correction or complementation of the position that is calculated based on the GNSS signals and the correction signal. The IMU **135** outputs a signal more frequently than the GNSS signals. Utilizing this highly frequent signal allows the position and orientation of the agricultural machine **100** to be measured more frequently (e.g., about 10 Hz or above). Instead of the IMU **135,** a 3-axis accelerometer and a 3-axis gyroscope may be separately provided. The IMU **135** may be provided as a separate device from the positioning device **130.**

In addition to or instead of the GNSS receiver **131** and the IMU **135,** the positioning device **130** may include other kinds of sensors. Depending on the environment that is traveled by the agricultural machine **100,** it is possible to estimate the position and orientation of the agricultural machine **100** with a high accuracy based on data from such sensors.

By using the positioning device **130** as such, it is possible to generate a map of crop rows and ridges as detected by the aforementioned row detection systems **1000** and **2000.**

For example, the drive device **140** may include various devices that are needed for the traveling of the agricultural machine **100** and the driving of the implement **300,** e.g., the aforementioned prime mover **102,** transmission **103,** differential including a locking differential mechanism, steering device **106,** and linkage device **108.** The prime mover **102** includes an internal combustion engine such as a diesel engine. Instead of an internal combustion engine or in addition to an internal combustion engine, the drive device **140** may include an electric motor that is dedicated to traction purposes.

The steering wheel sensor **150** measures the angle of rotation of the steering wheel of the agricultural machine **100.** The angle-of-turn sensor **152** measures the angle of turn of the front wheels **104F,** which are the wheels responsible for steering. Measurement values by the steering wheel sensor **150** and the angle-of-turn sensor **152** are used for the steering control by the controller **180.**

The storage device **170** includes one or more storage media such as a flash memory or a magnetic disc. The storage device **170** stores various data that is generated by the sensors and the controller **180**. The data that is stored by the storage device **170** may include map data in the environment that is traveled by the agricultural machine **100,** and data of a target path of automatic steering. The storage device **170** also stores a computer program(s) to cause the ECUs in the controller **180** to perform various operations to be described later. Such a computer program(s) may be provided for the agricultural machine **100** via a storage medium (e.g., a semiconductor memory or an optical disc) or through telecommunication lines (e.g., the Internet). Such a computer program(s) may be marketed as commercial software.

The controller **180** includes a plurality of ECUs. The plurality of ECUs include an ECU **181** for image recognition, an ECU **182** for speed control, an ECU **183** for steering control, an ECU **184** for automatic steering control, an ECU **185** for implement control, an ECU **186** for display control, and an ECU **187** for buzzer control. The ECU **181** for image recognition functions as a processing device of the row detection system. The ECU **182** controls the prime mover **102,** the transmission **103,** and the brakes included in the drive device **140,** thus controlling the speed of the agricultural machine **100**. The ECU **183** controls the hydraulic device or electric motor included in the steering device **106** based on a measurement value of the steering wheel sensor **150,** thus controlling the steering of the agricultural machine **100.** The ECU **184** performs computations and controls for achieving auto-steer driving, based on signals which are output from the positioning device **130,** the steering wheel sensor **150,** and the angle-of-turn sensor **152**. During auto-steer driving, the ECU **184** sends the ECU **183** a command to change the steering angle. In response to this command, the ECU **183** controls the steering device **106** to change the steering angle. In order to cause the implement **300** to perform a desired operation, the ECU **185** controls the operation of the linkage device **108**. Also, the ECU **185** generates a signal to control the operation of the implement **300,** and transmits this signal from the communication IF **190** to the implement **300**. The ECU **186** controls displaying on the operational terminal **200**. For example, the ECU **186** may cause a display device of the operational terminal **200** to present various indications, e.g., a map of the field, detected crop rows or ridges, the position of the agricultural machine **100** and a target path in the map, pop-up notifications, and setting screens. The ECU **187** controls outputting of alarm sounds by the buzzer **220.**

Through the action of these ECUs, the controller **180** realizes driving via manual steering or automatic steering. During usual auto-steer driving, the controller **180** controls the drive device **140** based on the position of the agricultural machine **100** as measured or estimated by the positioning device **130** and the target path stored in the storage device **170**. As a result, the controller **180** causes the agricultural machine **100** to travel along the target path. On the other hand, in a row-following control mode where travel is done along the rows, the ECU **181** for image recognition determines from a detected crop row or ridge the edge lines of the crop row or ridge, and generates a target path based on these edge lines. The controller **180** performs an operation in accordance with this target path.

The plurality of ECUs included in the controller **180** may communicate with one another according to a vehicle bus standard such as CAN (Controller Area Network). Although the ECUs **181** to **187** are illustrated as individual corresponding blocks in FIG. **43,** each of these functions may be implemented by a plurality of ECUs. Alternatively, an onboard computer that integrates the functions of at least some of the ECUs **181** to **187** may be provided. The controller **180** may include ECUs other than the ECUs **181** to **187,** and any number of ECUs may be provided in accordance with functionality. Each ECU includes a control circuit including one or more processors.

The communication IF **190** is a circuit that performs communications with the communication IF **390** of the implement **300**. The communication IF **190** performs exchanges of signals complying with an ISOBUS standard such as ISOBUS-TIM, for example, between itself and the communication IF **390** of the implement **300.** This causes the implement **300** to perform a desired operation, or allows information to be acquired from the implement **300.** Moreover, the communication IF **190** can communicate with an external computer via a wired or wireless network. The external computer may be a server computer in a farming support system which centralizes management of information concerning fields by using a cloud, and assists in agriculture by utilizing the data on the cloud, for example.

The operational terminal **200** is a terminal for the user to perform a manipulation related to the traveling of the agricultural machine **100** and the operation of the implement **300,** and may also be referred to as a virtual terminal (VT). The operational terminal **200** may include a display device such as a touch screen panel, and/or one or more buttons. By manipulating the operational terminal **200,** the user can perform various manipulations, such as switching ON/OFF the automatic steering mode, switching ON/OFF the cruise control, setting an initial position of the agricultural machine **100,** setting a target path, recording or editing a map, switching between 2WD/4WD, switching ON/OFF the locking differential, and switching ON/OFF the implement **300**. At least some of these manipulations can also be realized by manipulating the operation switches **210**. Displaying on the operational terminal **200** is controlled by the ECU **186.**

The buzzer **220** is an audio output device to present an alarm sound for alerting the user of an abnormality. For example, during auto-steer driving, the buzzer **220** may present an alarm sound when the agricultural machine **100** has mistracked from the target path by a predetermined distance or more. Instead of the buzzer **220,** a loudspeaker of the operational terminal **200** may provide a similar function. The buzzer **220** is controlled by the ECU **186.**

The drive device **340** in the implement **300** performs a necessary operation for the implement **300** to perform a predetermined task. The drive device **340** includes devices adapted to the intended use of the implement **300,** e.g., a pump, a hydraulic device, an electric motor, or a pump. The controller **380** controls the operation of the drive device **340.** In response to a signal that is transmitted from the agricultural machine **100** via the communication IF **390,** the controller **380** causes the drive device **340** to perform various operations. Moreover, a signal that is in accordance with the state of the implement **300** may be transmitted from the communication IF **390** to the agricultural machine **100.**

In the above preferred embodiments, the agricultural machine **100** may be an unmanned work vehicle which performs self-driving. In that case, component elements which are only required for human driving, e.g., the cabin, the driver's seat, the steering wheel, and the operational terminal, do not need to be provided in the agricultural machine **100.** The unmanned work vehicle may perform a similar operation to the operation according to any of the above embodiments via autonomous driving, or by remote manipulations by a user.

A system that provides the various functions according to embodiments can be mounted to an agricultural machine lacking such functions as an add-on. Such a system may be manufactured and sold independently from the agricultural machine. A computer program for use in such a system may also be manufactured and sold independently from the agricultural machine. The computer program may be provided in a form stored in a computer-readable, non-transitory storage medium, for example. The computer program may also be provided through downloading via telecommunication lines (e.g., the Internet).

## INDUSTRIAL APPLICABILITY

The technique according to the present disclosure can be applied to agricultural machines, such as vehicles for crop management, vegetable transplanters, or tractors, for example.

## REFERENCE SIGNS LIST

**10** · · · ground surface, **12** · · · crop row, **14** · · · intermediate region (work path), **16** · · · ridge, **40** · · · image, **42** · · · enhanced image, **44** · · · plan view image, **100** · · · agricultural machine, **110** · · · vehicle body, **120** · · · imaging device, **122** · · · processing device, **124** · · · automatic steering device

## Claims

**1.**   A row detection system comprising:

an imaging device mounted to an agricultural machine having one or more wheels, the imaging device being configured to image a ground surface that is traveled by the agricultural machine to acquire time-series images containing at least a portion of the ground surface; and
a processing device configured to perform image processing for the time-series images, wherein,
the processing device is configured to:
from the time-series images, select a search region in which to detect at least one of crop rows and ridges, the search region having a size and shape containing at least a portion(s) of the one or more wheels.

**2.**   The row detection system of claim 1, wherein,
the processing device is configured to:

detect at least a portion (s) of the one or more wheels from the time-series images; and
select as the search region a region that contains at least the detected portion(s) of the one or more wheels.

**3.**   The row detection system of claim 1 or 2, wherein the search region has a shape that contains, among the at least one of crop rows and ridges existing in the time-series images, a crop row or ridge that is located on a left side of the one or more wheels over to a crop row or ridge that is located on a right side of the one or more wheels.

**4.**   The row detection system of any one of claims 1 to 3, wherein the processing device is configured to estimate a positional relationship between the at least detected one of crop rows and ridges and the one or more wheels based on an image of at least the portion (s) of the one or more wheels contained in the search region.

**5.**   The row detection system of claim 4, wherein the processing device is configured to estimate a positional relationship between the at least detected one of crop rows and ridges and the agricultural machine based on the positional relationship.

6. The row detection system of any one of claims 1 to 5, wherein the processing device is configured to: detect at least the portion (s) of the one or more wheels contained in the search region; and based on an image of at least the detected portion(s) of the one or more wheels, estimate a position of the one or more wheels relative to the agricultural machine.

7. The row detection system of any one of claims 1 to 6, wherein, the processing device is configured to:

acquire time-series color images from the imaging device;
generate from at least the search region of the time-series color images a plan view image of at least the search region of the ground surface in which a color of a crop row is enhanced;
classify the plan view image into first pixels of which an index value for the color is equal to or greater than a threshold and second pixels of which the index value is below the threshold; and
determine the positions of the edge lines of the crop row based on the index values of the first pixels.

8. The row detection system of any one of claims 1 to 7, wherein the processing device is configured to generate and output a target path based on the positions of the crop rows or ridges.

9. The row detection system of any one of claims 1 to 8, wherein the processing device is configured to:

from a plurality of images among the time-series images that have been acquired at different points in time, determine a first amount of movement of each of the plurality of feature points in an image plane through feature point matching;
through perspective projection of each of the plurality of feature points from the image plane onto a reference plane corresponding to the ground surface, determine a second amount of movement of each projection point in the reference plane based on the first amount of movement; and,
based on the second amount of movement, estimate heights of the plurality of feature points from the reference plane to detect a ridge on the ground surface.

10. The row detection system of claim 9, wherein,

given a height Hc of a center point of the perspective projection from the reference plane,
heights dH of the plurality of feature points from the reference plane,
a second amount of movement L of a feature point whose dH is zero on the reference plane, and
a second amount of movement L+dL of a feature point whose dH is greater than zero,
the processing device is configured to determine the height of each feature point as $Hc \cdot (1.0-L/(L+dL))$.

11. An agricultural machine having the row detection system of any one of claims 1 to 10, comprising:

traveling equipment including a wheel responsible for steering; and
an automatic steering device configured to control a steering angle of the wheel responsible for steering based on the positions of the crop rows or ridges as determined by the row detection system.

12. The agricultural machine of claim 11, wherein, based on the time-series images, the processing device of the row detection system is configured to monitor a positional relationship between the crop rows or ridges and the wheel responsible for steering, and supply a positional error signal to the automatic steering device.

13. A computer-implemented method of row detection, the method of row detection causing a computer to execute:

from an imaging device mounted to an agricultural machine having one or more wheels, acquiring time-series images by imaging a ground surface that is traveled by the agricultural machine, the time-series images containing at least a portion of the ground surface; and
from the time-series images, selecting a search region in which to detect at least one of crop rows and ridges, the search region having a size and shape containing at least a portion(s) of the one or more wheels.

*FIG.1*

*FIG.2*

*FIG.3*

*FIG.4*

*FIG.5*

*FIG.6*

## FIG.7

1000  120          122          124

IMAGING DEVICE → PROCESSING DEVICE → AUTO-STEERING

## FIG.8

122

26 COMMUNICATOR    28 STORAGE DEVICE

30

20 PROCESSOR    22 ROM    24 RAM

FIG.9

40

FIG.10

42

## FIG.11

## FIG.12

FIG.13

*FIG.14*

*FIG.15*

FIG.16

FIG.17

*FIG.18*

START

↓

SET SCANNING LINE DIRECTION
(ANGLE) ⟋ S10

↓

TOTAL COLOR INDEX VALUES
ON EACH SCANNING LINE ⟋ S12

↓

FROM HISTOGRAM OF TOTAL VALUES,
DETERMINE A SCANNING LINE
DIRECTION THAT IS PARALLEL TO
CROP ROW ⟋ S14

↓

FROM PEAK VALUES OF PEAK VALUE
HISTOGRAM BASED ON SCANNING
LINES PARALLEL TO CROP ROW,
DETERMINE EDGE LINE POSITIONS OF
CROP ROW ⟋ S16

↓

END

## FIG.19

## FIG.20

*FIG.21*

*FIG.22*

SCANNING LINE POSITION

FIG.23

FIG.24

EP 4 335 267 A1

## FIG.25

## FIG.26

TOTAL VALUE OF INDEX VALUES

SCANNING LINE POSITION

39

*FIG.27*

*FIG.28*

*FIG.29*

*FIG.30*

*FIG.31*

*FIG.32*

FIG.33

## FIG.34

| | | | |
|---|---|---|---|
| 52 | 53 | 54 | 55 |
| IMAGE ACQUISITION | FEATURE POINT MATCHING | AMOUNT OF MOVEMENT CALCULATION | FEATURE POINT HEIGHT ESTIMATION |

| | | |
|---|---|---|
| SCANNING LINE DIRECTION DETERMINATION | EDGE LINE POSITION DETERMINATION | TARGET PATH GENERATION |
| 56 | 57 | 58 |

## FIG.35

HIGHT (MEAN VALUE)

SCANNING LINE POSITION

*FIG.36*

2000

120

122

124

IMAGING DEVICE

PROCESSING DEVICE

SEARCH REGION SELECTION

AUTO STEERING

FIG.37

FIG.38

*FIG.39*

*FIG.40*

FIG.41

FIG.42

# FIG.43

## INTERNATIONAL SEARCH REPORT

| International application No. |
|---|
| **PCT/JP2022/004549** |

| **A.** | **CLASSIFICATION OF SUBJECT MATTER** |
|---|---|
| | ***A01B 69/00***(2006.01)i<br>FI: A01B69/00 303B |
| | According to International Patent Classification (IPC) or to both national classification and IPC |

| **B.** | **FIELDS SEARCHED** |
|---|---|
| | Minimum documentation searched (classification system followed by classification symbols)<br>A01B69/00 |
| | Documentation searched other than minimum documentation to the extent that such documents are included in the fields searched<br>Published examined utility model applications of Japan 1922-1996<br>Published unexamined utility model applications of Japan 1971-2022<br>Registered utility model specifications of Japan 1996-2022<br>Published registered utility model applications of Japan 1994-2022 |
| | Electronic data base consulted during the international search (name of data base and, where practicable, search terms used) |

**C.** **DOCUMENTS CONSIDERED TO BE RELEVANT**

| Category* | Citation of document, with indication, where appropriate, of the relevant passages | Relevant to claim No. |
|---|---|---|
| A | 鹿沼隆宏 外2名, 画像処理による作物列検出および自己位置同定 (第1亮), 農業機械学会誌 (1997), 第57巻第2号, [retrieval date 22 March 2022], pp. 57-63, https://www.jstage.jst.go.jp/article/jsam1937/59/5/59_5_37/_pdf<br>[Summary], fig. 6, (KANUMA, Takahiro et al. Image Analysis of Crop Row and Position Identification (Part 1). JOURNAL of the JAPANESE SOCIETY of AGRICULTURAL MACHINERY (1997). vol. 57, no. 2.) | 1-13 |
| A | 鳥居徹 外4名, 自律走行のための作物列の画像処理に関する研究 (第2亮), 農業機械学会誌(1995), 第57巻 第6号, [retrieval date 22 March 2022], pp. 53-59, https://www.jstage.jst.go.jp/article/jsam1937/57/6/57_6_53/_article/-char/ja/<br>[Summary], fig. 9, (TORII, Toru et al. Image Analysis of Crop Row Used for Agricultural Mobile Robot (Part 2). JOURNAL of the JAPANESE SOCIETY of AGRICULTURAL MACHINERY (1995). vol. 57, no. 6.) | 1-13 |
| A | JP 6-14611 A (KUBOTA CORP) 25 January 1994 (1994-01-25)<br>fig. 10 | 1-13 |
| A | JP 4-325003 A (KUBOTA CORP) 13 November 1992 (1992-11-13)<br>fig. 3 | 1-13 |

☑ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 March 2022** | **05 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/004549**

C.    DOCUMENTS CONSIDERED TO BE RELEVANT

| Category* | Citation of document, with indication, where appropriate, of the relevant passages | Relevant to claim No. |
|---|---|---|
| A | JP 2016-208871 A (UNIV KAGOSHIMA) 15 December 2016 (2016-12-15)<br>    fig. 6 | 1-13 |
| A | 井上秀雄　外 1 名, 運転支援機能に対する車両評価指標構築の研究, 先進自動車研究　2020年度　研究尭告, 神奈川工科大学　工学教育研究推進機構, [retrieval date 22 March 2022], pp. 1-132, https://www.kanagawa-it.ac.jp/~l4024/research/pdf/doc_12_03_2020.pdf?v=20210517<br>    pp. 26-29, (INOUE, Hideo et al.), non-official translation (Research on construction of vehicle evaluation index for driver assist functions. 2020 Research Report on Advanced Vehicle Research. Kanagawa Institute of Technology Promoting Organization of Technological Education and Research.) | 1-13 |

**INTERNATIONAL SEARCH REPORT**
Information on patent family members

International application No.

**PCT/JP2022/004549**

| Patent document cited in search report | | | Publication date (day/month/year) | Patent family member(s) | Publication date (day/month/year) |
|---|---|---|---|---|---|
| JP | 6-14611 | A | 25 January 1994 | (Family: none) | |
| JP | 4-325003 | A | 13 November 1992 | (Family: none) | |
| JP | 2016-208871 | A | 15 December 2016 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016208871 A